# EUROPEAN PATENT SPECIFICATION

(11) **EP 3 877 601 B1**
(45) Date of publication and mention of the grant of the patent: **24.12.2025**
(21) Application number: 19801834.3
(22) Date of filing: 08.11.2019
(51) Int. Cl.: E04B 2/74, E04C 2/38, E04C 2/36, A47B 96/20, A47F 11/02, F16B 39/24, E04B 1/86, E04B 1/84, E04C 2/296, F16B 12/14

(54) **A ROOM DIVIDER PANEL**
RAUMTEILERPANEEL
PANNEAU DE SÉPARATION DE PIÈCE

(30) Priority: 09.11.2018 SE 1851401; 20.12.2018 SE 1851616
(43) Date of publication of application: 15.09.2021
(73) Proprietor: Inter IKEA Systems B.V., 2616 LN Delft (NL)
(72) Inventor: ANDERSSON, Benny, 343 37 Älmhult (SE)
(74) Representative: Ström & Gulliksson AB
(86) International application number: PCT/EP2019/080666
(87) International publication number: WO 2020/094837

(56) References cited:
- WO-A1-2012/048738
- FR-A1- 2 351 295
- JP-A- H11 280 738
- US-A- 4 310 995
- US-A- 4 989 688
- US-A- 6 141 926
- US-A1- 2017 182 736

## Description

### Technical field

The present invention generally relates to a panel for a room divider.

### Background

In urban society, there is an increasing need for utilizing office areas as efficiently as possible. Thus, open office areas are often sectioned off into working stations or office areas by room dividers to allow for flexible and efficient usage of the office area. Such room dividers are typically made up of a number of panels attached side-by side.

Further, at home compact living has become a trend, especially in major cities. Due to urbanization, there is an increasing need to utilize the living area in apartments as efficiently as possible. Further, for growing families in cities, it is of interest to section of part of the living for new family members. Room dividers have thus found use in homes as well.

Panels for room dividers are well known in the art (see for example US 4,310,995). They typically comprise a steel or wood frame. Further, the surface of the panel is normally covered by a fabric. In some panels the fabric is stretched over the frame. The panel may or may not, depending on the intended use, be provided with a board connected to the frame and supporting the fabric. Further, the panel may be filled with lightweight, sound absorbing material. Frame based panels are rigid. Further, the frame allows for assembling panels side-by-side, as the frame may be provided with connecting means, e.g. threads. Via such connecting means, attachment members may connect two panels to each other. Further, the frame may be provided with supports, e.g. adjustable feet.

As disclosed in US 2009/0094913 A1, panel systems for assembling room dividers can generally be divided into two major types: a) those having wall sections comprised of a single monolithic panel; and b) those having wall sections comprised of a plurality of smaller panels stacked one above the other in substantially parallel relation to form each wall section. The latter has emerged to provide further flexibility e.g. in terms of adjusting the height of various segments of room dividers. Smaller panels further have the advantage of being easier to handle. However, assembling smaller panels into wall sections is time consuming. Moreover, the flexibility is still limited.

US 4 989 688 A discloses a room divider panel.

Especially in private homes, but also in offices, it would be highly desired to have inexpensive, light-weight panels to be assembled into room dividers. Such panels would be even more useful if the end-consumer could adopt the length himself in an easy way.

### Summary

An object of the invention is to at least alleviate, at least one of the above stated problem. Thus, there is provided room divider panel according to claim 1 addressing said problems. The panel comprises a hollow board material with a first sheet and a second sheet. In order to provide a room divider panel, at least one of the first sheet and second sheet, at its outer surface, is coated with a fabric to provide a room divider panel. The sheets may be sheets comprising lignocellulosic fibers. Thus, the sheets may be sheets of a particle board, fiber board, MDF board, HDF board, or paper board. Especially, the sheets may be paper sheets, such as paperboard sheets. The paperboard sheets, such as paperboard sheets comprising re-cycled paper, may have a surface weight of 200 to 800 g/m², such as 400 to 700 g/m². Further, the sheets may be a laminate comprising paper sheet(s) as well as other layers, e.g. metal foil and/or plastic film. As recognized by the skilled person, paper is a thin material produced by pressing together moist fibers of cellulose pulp derived from wood, rags or grasses, and drying them into flexible sheets. The cellulose pulp is typically derived from wood. Paper is typically far more flexible than other fiber boards comprising lignocellulosic fibers. For continuous production of the room divider panel it is preferred if the sheets are flexible. The sheets may be 0.1 to 5 mm thick, such as 0.3 to 3 mm thick or 0.5 to 2 mm thick. The fabric serves to provide a more aesthetic appearance. Further, the fabric is sound absorbing. Typically, both the first and the second sheets are coated with a fabric at their outer surfaces.

According to an embodiment, the sheets are paperboard sheets comprising re-cycled paper. In re-cycled paperboard, the length of the lignocellulosic fibers are typically shorter than in virgin paperboard. Shorter fiber length will provide a more flexible, less stiff material with lower mechanical resistance. In the present application this may actually be preferred, as a hollow board material with sheets of re-cycled paperboard will be far less prone to buckle compared to a hollow board material with sheets of another fiber board material.

In the hollow board material, a plurality of distance members is arranged between the first sheet and the second sheet. The plurality of distance members is connected to the first and second sheet. The distance members serve to separate the first sheet and the second sheet, being arranged in parallel. Further, the distance members make the hollow board material more rigid and less compressible.

Furthermore, in the hollow board material a first and a second lath are arranged in parallel between the first sheet and the second sheet. They are connected to the first sheet and to the second sheet. The laths may be arranged along opposite edges of hollow board material. The first and second laths may be laths of a particle board, fiber board, MDF board, HDF board, or paper board. Especially, the first and second laths may be laths of paper board. Each of the laths are multilayered and comprises a plurality of strips arranged on top of each other. The strips may be paper strips, such as paperboard strips. By arranging the laths along opposite edges of sheets, a hollow board material is provided.

When assembled into a room divider, the laths are typically positioned vertically. In contrast to room divider panels in the art, the present panel does not typically comprise any full frame, e.g. no laths are arranged perpendicular to the first and a second lath at the edges of the hollow board material. This means that the end consumer, e.g. by cutting the panel, may easily adjust the length of the panel. Further, there is no need to reassemble a frame once the panel has been shortened. As the sheets, the distance members and the laths typically are all made of paper, the panel may by shortened by cutting with e.g. a simple knife or saw. This implies that the end consumer is provided with a truly flexible room divider panel.

Hollow board material of this type is known in the art (cf. WO 2012/048738). As described in WO 2010/069994 (referred to in WO 2012/048738), the present hollow board material has been disclosed as a board material for manufacturing of furniture, e.g. bookshelves, shelves, and tables. It was however considered and confirmed that such hollow board material may be used as board material in room dividers panels, if coated with a fabric. Even though the laths are multilayered and comprise a plurality of paper strips arranged on top of each other, they still have sufficient strength for securing a screw to be screwed into them. Thus, a connector may be attached to an end of the lath, e.g. by means of a screw. The connector allows for mounting the panel as part of a room divider. Further, as the connector may be attached to the panel in a simple manner, e.g. by screwing, it may be mounted to the panel, once the panel has been cut into the desired length, by the end-consumer.

According to an embodiment, a first connector is attached to the first lath at an end of the first lath. By attaching a connector to the panel, it is possible to mount the panel as part of a room divider. Typically, a second connector is attached to the second lath at an end of the second lath. The first and second connector may be attached at the same side of the panel. Further, the opposite side of the panel may also be provided with connectors at the ends of the laths. Thus, the panel may be provided with four connectors, one at each end, i.e. corner, of the panel.

Various further parts, e.g. profiles forming trim pieces, adjustable feet, and attachment members, may be attached to the connectors. Profiles having a U-shape which form trim pieces may be used to cover one or more of the edges of the panel, such as one or both of the edges perpendicular to the first and second lath. The trim piece may thus serve to cover any unevenly cut sections. Given that the end consumer may like to adjust the length of the panel by cutting it, it may be desired to cover unevenly cut sections. Adjustable feet may be used to position the panel on e.g. a floor as part of a room divider. Attachment members, also in the shape of U-shaped profiles, may be used to attach two panels to each other and are preferably attachable exteriorly of the U-shaped profiles that forms trim-pieces. The attachment members may be straight as well as angled, e.g. 90°.

The fabric covering at least one of the first and the second sheets may be of various kinds. It may be a woven fabric. However, in order to reduce cost, it may be preferred to apply a non-woven fabric. Further, a non-woven fabric may even be produced on-line. Furthermore, a non-woven fabric may be fluffier, which, as outlined below may be preferred. Further, a non-woven fabric, e.g. a spunbond, does not, in contrast to a woven fabric, suffer from fringing after having being cut. In addition, a non-woven fabric allows for color variation/mélange expression as well as the possibility to create a pattern with a heated calendar.

According to an embodiment, the fabric is a non-woven fabric.

According to an embodiment, the non-woven fabric is a carded, and optionally cross-lapped, needle punched non-woven fabric. Needling the non-woven fabric will orient part of the fibers in the non-woven fabric perpendicularly to the extension of the non-woven fabric. Carding and cross-lapping will orient part of the fibers in non-woven fabric parallel to the extension of the non-woven fabric. Further, the non-woven fabric may comprise a melt fiber, e.g. such as 10 to 50 wt.% melt fibers. A non-woven fabric comprising a melt fiber may be thermally bonded. The melt fiber may be a bi-component fiber. Heat activating the melt fiber, i.e. thermally binding the non-woven fabric, e.g. in a through air oven, will further improve the mechanical resistance to e.g. fiber pull out of the non-woven fabric, such that a Velcro may be attached in a releasable manner to the non-woven fabric.

A carded, and optionally cross-lapped, needle punched non-woven fabric may be a non-woven fabric of recycled polyester. Alternatively, the non-woven fabric may be a non-woven fabric of virgin polyester. A carded, and optionally cross-lapped, needle punched non-woven fabric of polyester, e.g. recycled polyester, may have a surface weight of 50 to 500 gsm (g/m²), such as 100 to 400 gsm (g/m²), or 150 to 300 gsm (g/m²). Further, the fibers in the non-woven fabric may be fibers of a bio-based thermoplastic. Such a bio-based thermoplastic polyester may be selected from the group consisting of polylactic acid (PLA), polyhydroxyalkanoates (PHA), polyhydroxybutyrate (PHB), and polyethylene furanoate (PEF). The fabric may be attached to the hollow board material by means of an adhesive, e.g. melt glue. Further, in embodiments wherein the fabric is a non-woven fabric, the non-woven fabric may comprise a melt fiber, e.g. a bi-component fiber. A non-woven fabric comprising a melt fiber may be attached to the hollow board material by partly melting the melt fiber. It may further be attached to the sheets before assembling the hollow board material by partly melting the melt fiber. Though a non-woven fabric comprising a melt fiber may be attached to the hollow board material solely by partly melting the melt fiber, it is preferred to also apply a separate adhesive, e.g. melt glue, to further improve the peeling resistance. The thermally bonded melt fiber mainly serves to improve the mechanical properties of the non-woven fabric.

According to an embodiment, a non-woven fabric of polyester comprises 50 to 100 wt.% staple fibers of polyester, such as 50 to 90 wt.% staple fibers of polyester and 10 to 50 wt.% melt fibers. The staple fibers may have a linear density of 2 to 12 dtex (grams per 10 km), such as 4 to 10 dtex, and the melt fiber may have a linear density of 1 to 8 dtex, such as 2 to 6 dtex. The melt fibers may be core sheath bi-component fibers, such as polyester core sheath bi-component fibers. Such core sheath bi-component may have polyester core a with a melting point of more than 200°C, such as of about 260°C. The sheath may comprise a co-polyester. Further, the sheath of the core sheath bi-component fiber may have a melting point of less than 200°C, e.g. about 110°C. The melting point of the polyester sheath may be lowered by co-polymerization with olefin groups, reducing the melting point significantly, e.g. to about 110 °C. Preferably, the melting point of the sheath of the core-sheath polyester binder fiber is at least 50°C lower, such as at least 75°C lower, or even at least 100°C lower, than the melting point of the core. Such a non-woven fabric of polyester may be a cross-lapped, needle punched non-woven fabric. It may have a surface weight of 50 to 500 gsm (g/m²), such as 100 to 400 gsm (g/m²) or 150 to 300 gsm (g/m²). Further, the non-woven fabric of polyester may be thermally bonded (melt bonded by heating the melt fibers).

The fiber blend in the non-woven fabric may compromise a mixture of fibers of various colors in order to provide a color mélange affect in the desired color scheme. Further, the fiber blend can be pure white to facilitate simple post coloring or printing option for any type of colors and patterns. In case of recycled PET fibers, they could be colored white, e.g. by using titanium dioxide, to maintain an equal level of whiteness.

According to an alternative embodiment, the non-woven fabric may be a spunbond fabric, such as a bi-co bonded, and/or needled, non-woven fabric. A spunbond fabric may be a spunbond fabric of recycled polyester. Alternatively, the spunbond fabric may be a spunbond fabric of virgin polyester. A spunbond fabric of recycled polyester may have a surface weight of 50 to 500 gsm (g/m²), such as 100 to 400 gsm (g/m²). Further, the fibers in the non-woven fabric, e.g. a spunbond fabric, may be fibers of a bio-based thermoplastic. Such a bio-based thermoplastic polyester may be selected from the group consisting of polylactic acid (PLA), polyhydroxyalkanoates (PHA), polyhydroxybutyrate (PHB), and polyethylene furanoate (PEF). The fabric may be attached to the hollow board material by means of an adhesive, e.g. melt glue. Further, in embodiments wherein the fabric is a non-woven fabric, the non-woven fabric may comprise a melt fiber, e.g. a bi-component fiber. A non-woven fabric comprising a melt fiber may be attached to the hollow board material by partly melting the melt fiber. It may further be attached to the sheets before assembling the hollow board material by partly melting the melt fiber.

As already described, at least one of the first and the second sheets is coated with a fabric at the outer surface. Further, the laths may be coated by the first or second sheet also at the edges of the hollow board material, e.g. by folding the sheet over the lath. Preferably, the laths are coated with a fabric also at the edges of the hollow board material, either directly on the lath or on a sheet covering the lath. In assembling two panels side-by-side, a compressible fabric, e.g. a non-woven fabric, covering the edges of the panel will result in a slit between the panels being filled by the fabric such that essentially no light will pass. The slit is thus nearly invisible and the dividing wall is perceived as a single entity.

The first and second laths, together with the first and second sheets, form a hollow board. In between the first and second laths, distance members are arranged. The distance members may comprise lignocellulosic fibers. The distance members may thus be distance members of a particle board, fiber board, MDF board, HDF board, or paper board. Preferably, the distance members may be distance members of paper board. According to an embodiment, the distance members are strips arranged perpendicular to the extension of the first and second sheets. Distance members in form of strips may be paper, e.g. paperboard, strips. Strips arranged perpendicular to the extension of the first and second sheets, may be arranged in a meandering pattern. The general direction of such a meandering pattern may be parallel with the longitudinal extension of the first and second lath. Further, the meandering pattern may be zigzag shaped, e.g. sinus shaped. In such a pattern, adjacent strips may be arranged in phase. Further, adjacent strips may be arranged in counter-phase.

The distance members may also be present in the form of a honeycomb structure, for example a honeycomb made from paper.

Apart from the distance members, a sound absorbing material may also be arranged between the first sheet and the second sheet. The sound absorbing material may be shredded paper, a high loft nonwoven, or textile. The shredded paper or textile may be recycled paper or textile. Further, the sound absorbing properties may also be improved by perforating one or both of the first and second sheets. Such perforation may be combined with a sound absorbing material or used on its own.

As already described, at least one connector may be provided forming a rigid structure for associated equipment. The at least one connector may be configured to be at least partially inserted in a cavity formed between said first and second sheets. Each connector is attached to a lath of the panel by means of a fastener, preferably a screw, providing for mounting the panel as part of a room divider. Preferably, the longitudinal extension of the screw is not parallel with the longitudinal extension of the laths, e.g. not parallel with the multilayers of the lath, as the screw then may risk separating two adjacent layers of strips in the lath. The connector distributes loads that the panel may be subjected to into each lath, improving the structural rigidity thereof.

Furthermore, each connector may comprise an inclined surface being configured to guide the fastener to attach to the at least one lath at an angle α being larger than 0°, preferably larger than 45°, in relation the longitudinal extension of the lath. Further, the angle α is preferably less than 90° to allow for easily accessing the fastener. The angle α may be larger than 45° and up to 75°. A longer fastener may thereby be used, allowing greater loads to be applied to the connector. Furthermore, the angle of the fastener facilitates connection thereof to the lath.

Each connector may comprise a connection element for associated equipment, the connection element facilitating connection of associated equipment to the connector and thus to the panel. As an example, a suspension member for assembling the panel as a sliding door may be connected to the connector via the connection element. Further, an adjustable foot may be connected to the connector via the connection element.

In one embodiment, at least one washer may be provided, and each connector is attachable to the lath by means of the fastener via the washer. While the washer may be a separate washer. It may also be an integrated washer as further outlined below.

In one embodiment, the washer is configured to be arranged against the inclined surface, the washer further comprises a hole through which the fastener is receivable and which is configured to be aligned with an opening in the inclined surface. The washer further comprises at least one hill on the surface of the washer configured to face away from the inclined surface, and the at least one hill is arranged only on one side of a line parallel with the surface and extending through the center of the hole. The washer facilitates that the fastener is attached to the lath at a desired angle. In an alternative embodiment, the washer is integrated in the inclined surface. According to such an embodiment, at least one hill is arranged on the surface of the inclined surface. The at least one hill has a top which is arranged only on one side of a line A parallel with the surface and extending through the center of an opening in the inclined surface.

According to an embodiment, a top of the hill of the washer is arranged below the center axis of the hole. This further facilitates the attachment of the fastener at a desired angle.

According to an embodiment, the strips in the first and second laths are arranged perpendicular to the extension of the first and second sheets.

Apart from the first and seconds laths, the panel may comprise further laths. As an example, a further lath may be arranged centered between the first and seconds laths to provide further rigidity to the panel. Further, the panel may be provided with a channel by arranging two laths in proximity to each other. A channel may receive a rod of e.g. a support.

According to embodiment, a third and a fourth lath are arranged in parallel between the first and second sheets to form a first channel. The third lath, the fourth lath, the first sheet, and the second sheet enclose the first channel. Such a first channel may be arranged centered between the first and second lath, i.e. the first channel being arranged in the centre of the panel. The third and fourth laths may be laths of particle board, fiber board, MDF board, HDF board, or paper board. Especially, the third and fourth laths may be laths of paper board. Similar to the first and second laths, the third and the fourth laths, may each comprise a plurality of strips arranged on top of each other. The strips may be paper strips, e.g. paperboard strips. The optional strips in the third and fourth laths may be arranged perpendicular to the extension of the first and second sheets.

According to embodiment, a fifth lath is arranged between the first and second sheets in parallel to the first lath to form a second channel. The first lath, the fifth lath, the first sheet and the second sheet enclose such a second channel. Thus, the second channel may be arranged along one side of the panel. The fifth lath may be lath of particle board, fiber board, MDF board, HDF board, or paper board. Especially, the fifth lath may be a lath of paper board. Similar to the first and second laths, the fifth lath may comprise a plurality of strips arranged on top of each other. The strips may be paper strips, e.g. paperboard strips. The optional strips in the fifth lath may be arranged perpendicular to the extension of the first and second sheets. According to such an embodiment, a sixth lath may optionally be arranged between the first and second sheets in parallel to the second lath to form a third channel. The second lath, the sixth lath, the first sheet and the second sheet enclose such a third channel. Thus, the third channel may be arranged along one side of the panel. The second and thirds channels are typically arranged at opposite sides of the panel. The sixth lath may be lath of a particle board, fiber board, MDF board, HDF board, or paper board. Especially, the sixth lath may be a lath of paper board. Similar to the first and second laths, the sixth lath may comprise a plurality of strips arranged on top of each other. The optional strips may be paper strips, e.g. paperboard strips. The strips in the sixth lath may be arranged perpendicular to the extension of the first and second sheets.

In order to provide the panel with self-supporting means to keep the panel in up-right position on e.g. a floor, the panel may be provided with a support. According to an embodiment, the panel is provided with at least one support having a rod received in the first, second, or third channel. Further, the support has a foot extending perpendicularly to the extension of the rod. In order to support the panel, the extension of the foot is not parallel with the extension of the first and second sheet. Preferably, the foot extends essentially perpendicularly to the extension of the first and second sheet. Further, the support may be provided with means for adjusting the position of the feet once the rod has been secured in the channel. As an example, the rod may comprise an outer pipe in which an inner rod is inserted. The foot may be attached to the inner rod. The position of the inner rod may be secured by means of a pin.

The present room divider panel may be assembled in various forms and have various uses. It may be used in offices, public spaces, such as schools, restaurants and shops, as well as in homes. In some applications, room divider panel(s) are arranged to extend from floor to ceiling, whereas in others they do not extend to the ceiling. Further, a room divider panel may be mounted as sliding door, e.g. in a wardrobe, wherein it serves to provide access to a space divided from the rest of the room.

A room divider may be provided by assembling two panels together. An embodiment thus relates to a room divider comprising at least two panels. In assembling panels together, an attachment member may be used to retain the panels in assembled position. The attachment member comprises a first portion configured to be attached to the first panel and a second portion configured to be attached to the second panel. Further, the attachment member is configured to retain the first and second panels in an assembled position.

As already described, the panel may be provided with at least one connector. In order to facilitate the assembly of two panels together, the connector may comprise a receiving portion. The receiving portion comprises a sleeve portion configured to engage with a notch of an attachment element of the attachment member.

Further, also a profile forming a trim piece to cover an edge of the panel may comprise a receiving portion. The profile may be attached to the panel via a connector.

According to an embodiment, each panel in a room divider comprises a receiving portion. Further, the room divider comprises at least one attachment member to retain the panels in assembled position. The first portion and/or the second portion of the attachment member comprises at least one attachment element. The attachment element is configured to be attached to a corresponding receiving portion. The attachment element may comprise a generally cylindrical portion configured to be inserted into the receiving portion. Further, each attachment element may comprise a generally conical portion at one end, preferably at an insertion end by which the attachment element is to be inserted into the receiving portion. Furthermore, the attachment element may comprise a notch configured to engage with a respective receiving portion. Preferably, the attachment element is configured to engage with the receiving portion in a snap fit.

Further advantageous features of the invention are elaborated in embodiments disclosed herein. In addition, advantageous features of the invention are defined in the dependent claims.

### Brief description of the drawings

The present invention will be described further below by way of example and with reference to the enclosed drawings. In the drawings:
Fig. 1a is a perspective view of a panel for a room divider system,
Fig. 1b is a perspective view of a panel for a room divider system according to an alternative embodiment,
Fig. 2a is a detail view of a lath of a panel for a room divider system,
Fig. 2b is a detail view of a lath of a panel for a room divider system according to another embodiment,
Fig. 3a is a perspective view of a room divider system comprising a number of panels,
Fig. 3b is a perspective view of a room divider system comprising a number of panels according to another embodiment,
Fig. 3c is a perspective view of a room divider system comprising a number of panels according to another embodiment,
Fig. 4a is a perspective view of a support for connection to the room divider system,
Fig. 4b is a perspective view of an adjustable foot for connection to the room divider system,
Fig. 5a shows a perspective view of an elongate attachment member according to one embodiment,
Fig. 5b shows a cross-section view of an elongate attachment member according to one embodiment,
Fig. 5c is a partial cross-section view of an L-shaped attachment member according to one embodiment,
Fig. 5d is a plan view of an L-shaped attachment member according to one embodiment,
Fig. 5e is a plan view of an L-shaped attachment member according to one embodiment,
Fig. 5f is a cross-section view of a T-shaped attachment member according to one embodiment,
Fig. 6a is an exploded cross-section view of a room divider system according to one embodiment,
Fig. 6b is a perspective cross-section view of a room divider system according to one embodiment,
Fig. 7a shows a side view of a connector according to one embodiment,
Fig. 7b shows a perspective view of a connector according to one embodiment,
Fig. 7c shows a perspective view of a connector according to one embodiment,
Fig. 8a shows a washer according to one embodiment,
Fig. 8b shows a top view of a washer according to one embodiment,
Fig. 9 shows a side view of a room divider system according to one embodiment,
Fig. 10 shows a perspective view of a connector according to one embodiment,
Fig. 11a is an exploded cross-section view of a room divider system comprising an elongate attachment member according to one embodiment,
Fig. 11b is a perspective cross-section view of a room divider system comprising an elongate attachment member according to one embodiment,
Fig. 12a is an exploded cross-section view of a room divider system comprising an L-shaped attachment member according to one embodiment,
Fig. 12b is a perspective cross-section view of a room divider system comprising an L-shaped attachment member according to one embodiment,
Fig. 13a is an exploded cross-section view of a room divider system comprising a T-shaped attachment member according to one embodiment,
Fig. 13b is a perspective cross-section view of a room divider system comprising a T-shaped attachment member according to one embodiment,
Fig. 14a is a perspective view of a suspension member for use in a room divider system with a sliding room divider according to one embodiment,
Fig. 14b is a cross-section view of a room divider system with a sliding room divider according to one embodiment,
Fig. 15a shows a first stage of an assembly sequence for assembling two panels into a room divider system according to one embodiment,
Fig. 15b shows a second stage of an assembly sequence for assembling two panels into a room divider system according to one embodiment,
Fig. 15c shows a third stage of an assembly sequence for assembling two panels into a room divider system according to one embodiment.
Fig. 16a shows an L-shaped assembly support according to one embodiment,
Fig. 16b shows an assembly support according to one embodiment.

### Detailed description

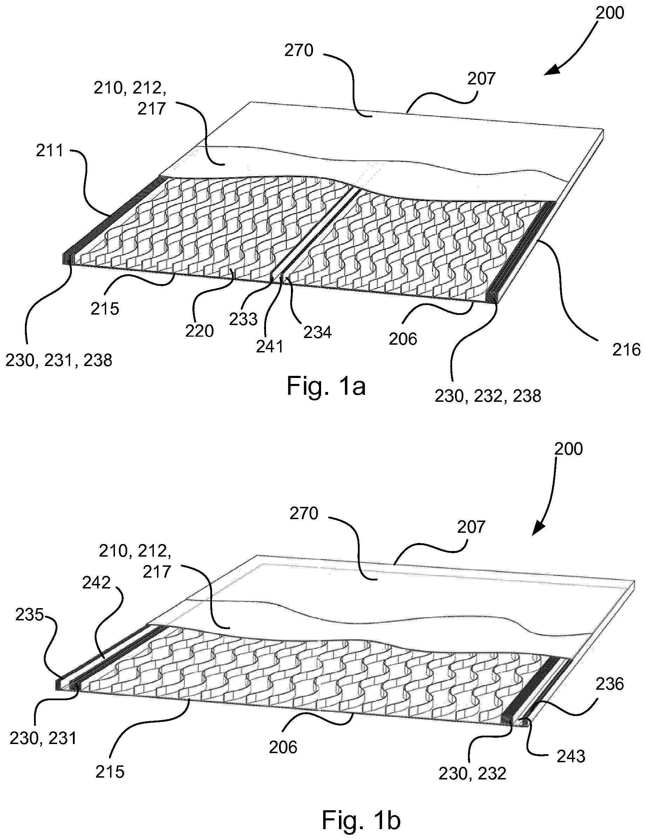

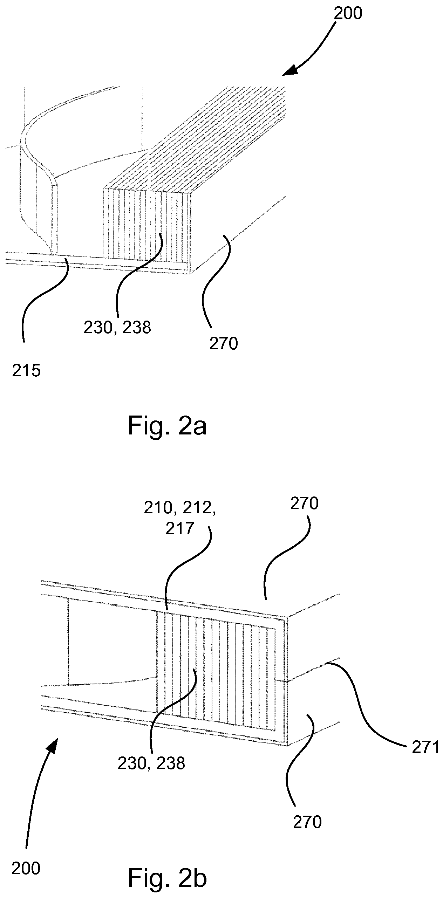

Figs 1 and 2 show a room divider panel 200, and parts thereof (Fig. 2), for a room divider system 100 according to an embodiment. The panel 200 preferably comprises a hollow board material. The hollow board material comprises two parallel sheets 210, 215. The sheets 210, 215 may comprise lignocellulose fibers. Thus, the sheets may be sheets of a particle board, fiber board, MDF board, HDF board, or paper board. Especially, the sheets may be paper sheets, such as paperboard sheets. Paperboard sheets may have a surface weight of 200 to 800 g/m², such as 400 to 700 g/m². Further, the sheets may be a laminate comprising paper sheet(s) as well as other layers, e.g. metal foil and/or plastic film. As recognized by the skilled person, paper is a thin material produced by pressing together moist fibers of cellulose pulp derived from wood, rags or grasses, and drying them into flexible sheets. The cellulose pulp is typically derived from wood. Paper is typically far more flexible than other fiber boards comprising lignocellulosic fibers. For continuous production of the room divider panel it is preferred if the sheets are flexible. The sheets may be 0.1 to 5 mm thick, such as 0.3 to 3 mm thick or 0.5 to 2 mm thick. The first sheet 210 and the second sheet 215 are separated by a plurality of distance members 220 arranged between the first sheet 210 and the second sheet 220. The distance members 220 are connected to the first sheet 210 and to the second sheet 215. The distance members 220 may be connected to the first sheet 210 and the second 215 sheet by means of an adhesive, such as a melt glue. The distance members 220 consists of paper strips meandering between the two parallel sheets 210, 215, perpendicular to the extension of the parallel sheets 210, 215. In order to provide a rigid panel and to allow for attachment of a connector 300, laths 230 are arranged between the first sheet 210 and the second sheet 215. The laths 230 comprises a plurality of strips 238 arranged on top of each other. The strips 238 are typically attached to each other by means of an adhesive to form a solid lath 230, comprising a multilayer of strips 238. The strips are paper strips. The laths 230 are arranged such that the strips 238 are arranged perpendicular to the extension of the parallel sheets 210, 215. At their outer surfaces 212, the first sheet 210 and the second sheet 215, are coated with a fabric 270.

In the embodiment shown in Fig. 1a, the panel comprises a first 231 and a second lath 232. The first lath 231 and the second lath 232 are arranged in parallel between the first sheet 210 and the second sheet 215. Further, they are connected to the first sheet 210 and the second 215 sheet by means of an adhesive, such as a melt glue. The first lath 231 and the second lath 232 are arranged along opposite edges 211, 216 of the hollow board material. As can be seen in Figs. 2a and 2b, the fabric 270 may be folded over the first lath 231. Similarly, the fabric 270 may be folded over the second lath 238 at the opposite edge of the hollow board material. Further, also the first sheet 210 and/or the second sheet 215 may be folded over the first lath 231. Similarly, the first sheet 210 and/or the second sheet 215 may be folded over the second lath 232. A splice 271 may be arranged along the edge of the edge of the hollow board material as shown in Fig. 2b. The splice 271 may also be arranged on the outer surfaces 212, of the first sheet 210 and/or the second sheet 215. If arranged on the outer surfaces 212, of the first sheet 210 and/or the second sheet 215, the splice 271 may be arranged over the first lath 231 or the second lath 231.

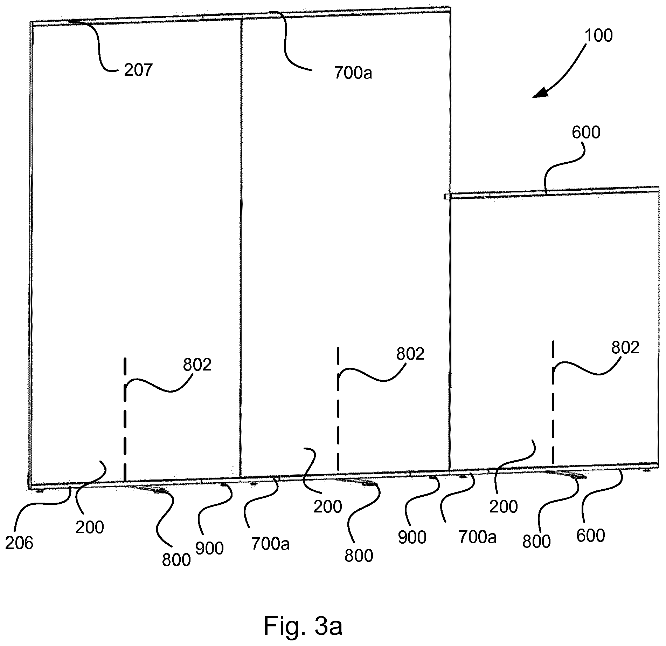

In the embodiment shown in Fig. 1a, the panel further comprises a third lath 233 and a fourth lath 234. The third and fourth lath 233, 234 are arranged in parallel between the first and the second sheet 210, 215. Further, they are connected to the first sheet 210 and the second 215 sheet by means of an adhesive, such as a melt glue. The third 233 and fourth lath 234, together with the first sheet 210 and the second sheet 215, form a first channel 241 between them. As shown in Fig. 3a, the first channel 241 may receive a support 800.

According to another embodiment, shown in Fig. 1b, the panel further comprises a fifth lath 235. The fifth lath 235 is arranged in between the first sheet 210 and the second sheet 215. Further, the fifth lath 235 is arranged in parallel with the first lath 231. The fifth lath 235 is connected to the first sheet 210 and the second 215 sheet by means of an adhesive, such as a melt glue. The fifth lath 235 and first lath 231, together with the first sheet 210 and the second sheet 215, form a second channel 242 between them. Further, the panel comprises a sixth lath 236. The sixth lath 236 is arranged in between the first sheet 210 and the second sheet 215. Further, the sixth lath 236 is arranged in parallel with the second lath 232. The sixth lath 236 is connected to the first sheet 210 and the second 215 sheet by means of an adhesive, such as a melt glue. The sixth lath 236 and second lath 232, together with the first sheet 210 and the second sheet 215, form a third channel 243 between them.

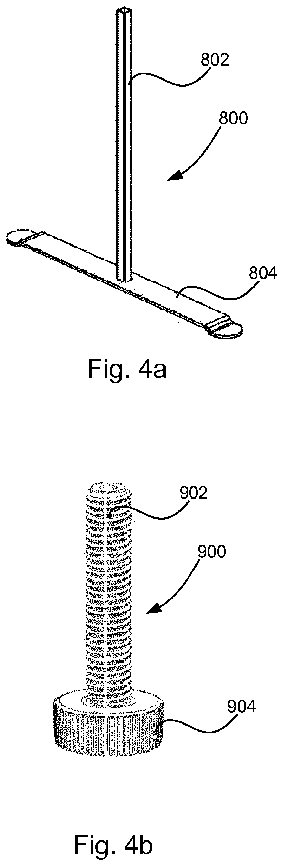

As is shown in Figs 3a-c, a number of panels 200 may be assembled into a room divider system 100. In Fig 3a, three panels 200 are shown assembled adjacently. It is to be understood that any number of panels 200 could be connected to each other, both fewer and more than three. The panels 200 are kept in upright position by supports 800, which can be seen in detail in Fig. 4a. Further, adjustable feet 900, which can be seen in detail in Fig. 4b, are provided on the lower end to provide stability and adjustability to the surface on which the room divider system 100 rests. The adjustable feet 900 may be conventional threaded feet, which are connected to each panel such that rotation of each foot 900 changes its protrusion from underside of the panel 200.

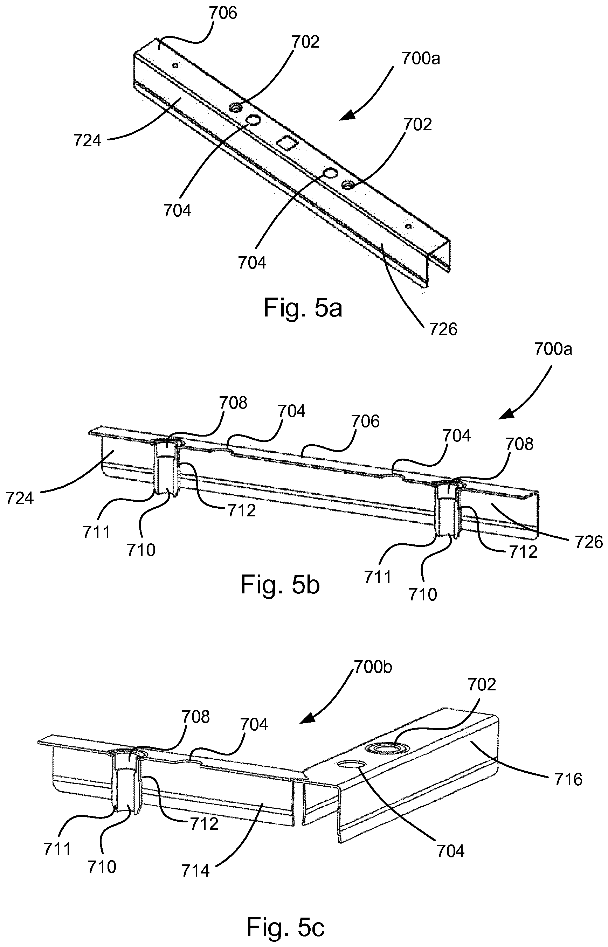

As shown in Fig 3a, the individual panels 200 are connected to each other via attachment members 700a, which can be seen in detail in Figs 5a and 5b respectively, attached to the connectors 300. The attachment members 700a may be placed over assembled panels, holding the panels together and covering any gap between adjacent panels. As will be discussed below, the attachment members 700a may have attachment elements 708 that connect to the connectors 300 and generate a force on the connectors 300, holding the panels together. As discussed in relation to Figs. 2a and 2b, fabric 270 may be folded over the edge of each panel. When the panels are pushed together edge-to-edge, as shown in Fig. 3a, the fabric on the edge of each panel may compress and be held in this compressed position by a retention force provided by the attachment members 700a. This ensures that there is no visible spacing between adjacently assembled panels. Further, by pushing the panels together sound is essentially prevented from passing between them, as the gap has been closed. Thus, the noise-cancelling effect of panels assembled as room divider system is improved. This is advantageous in e.g. open office areas sectioned off into working stations by a room divider system.

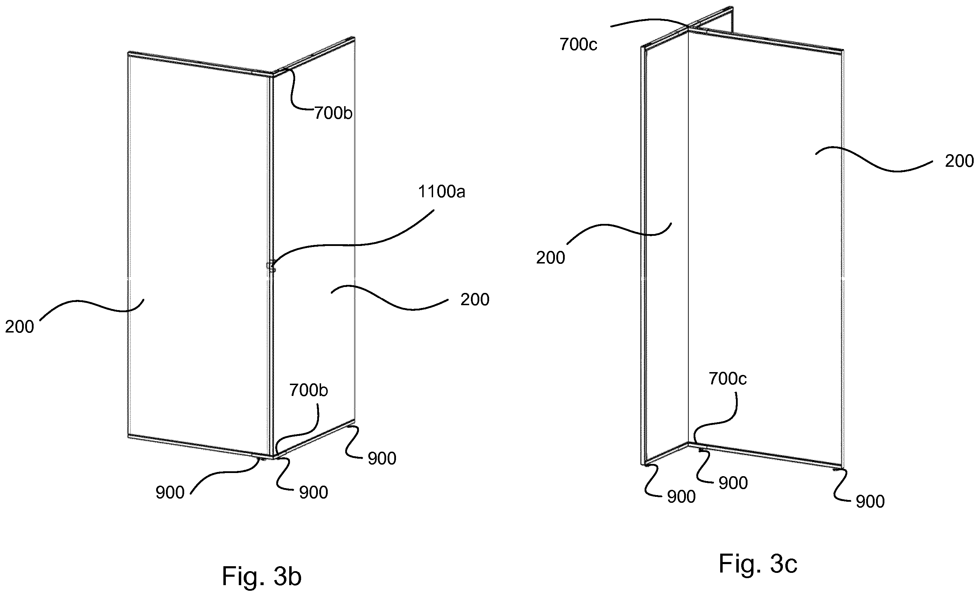

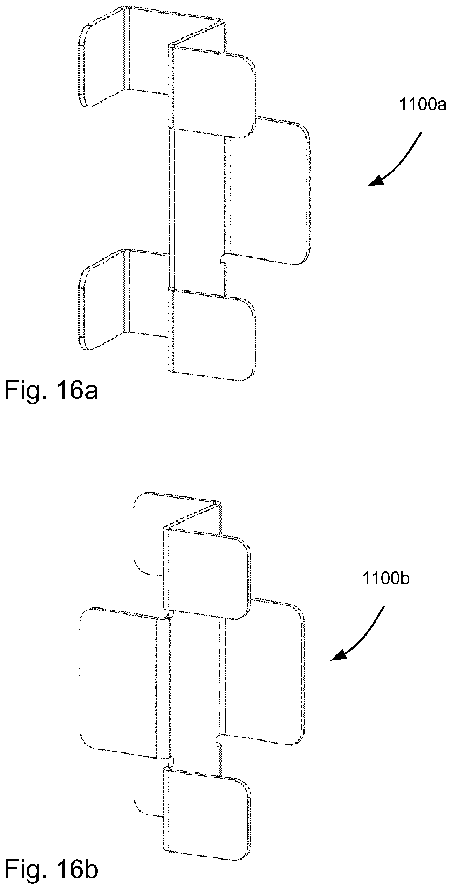

As is shown in Fig. 3b, a number of panels 200 may alternatively be assembled in an L-shape. The individual panels 200 are connected to each other via attachment members 700b, which can be seen in detail in Fig. 5c, attached to the connectors 300. Similarly to the arrangement shown in Fig. 3a, the attachment members 700b may be placed over assembled panels, holding the panels together and covering any gap between adjacent panels. The attachment members 700b may have attachment elements 708 that connect to the connectors 300 and generate a force on the connectors 300, holding the panels together. When the panels are pushed together the fabric on each panel may compress and be held in this compressed position by the retention force provided by the attachment members 700b. In this case, the retention force would be carried by the attachment elements 708 and the walls of a U-shaped part of the attachment members 700b. Further, adjustable feet 900 are provided on the lower end to provide stability and adjustability to the surface on which the room divider system 100 rests, as disclosed in relation to Fig. 3a. Also shown in Fig. 3b is an assembly support 1100a (Fig. 16a shows a close up of the support 1100a). The assembly support 1100a has two U-profile like portions arranged perpendicularly to each other, i.e. the assembly support 1100a is L-shaped. The assembly support 1100a is used to secure, i.e. keep in position, a first panel 200a during assembling panels 200 into a room divider system 100. Once the first panel 200a has been placed next to a second panel 200b on an attachment member 700b next to the floor, the assembly support 1100a prevents the first panel 200a from falling over before being secured by an upper attachment member 700b, as the first U-profile like portion engages with the first panel 200a and the second U-profile like portion engages with the second panel 200b.

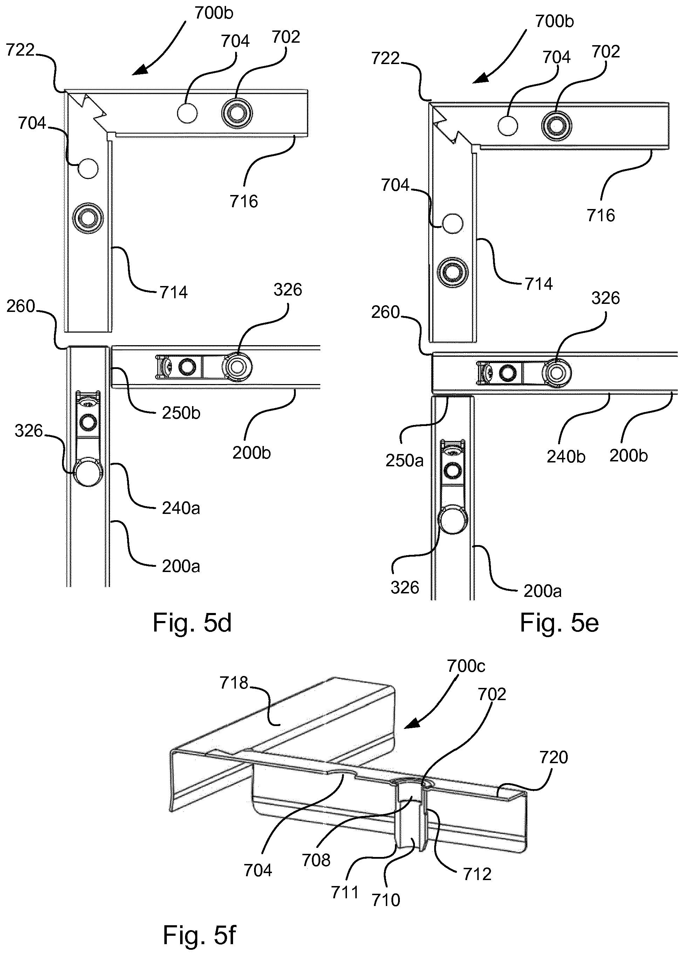

As is shown in Fig. 3c, a number of panels 200 may also be assembled in a T-shape. In some embodiments, two panels 200 may be assembled perpendicularly, such that a first panel is assembled with an edge adjacent a central part of a second panel. In other embodiments, three panels 200 may be assembled such that first and second panels are assembled adjacently, similar to the panels shown in Fig. 3a, and a third panel is assembled perpendicularly to the first and second panels, with an edge adjacent the interface between the first and second panels. The individual panels 200 are connected to each other via attachment members 700c, which can be seen in detail in Fig. 5d, attached to the connectors 300. Similarly to the arrangements shown in Figs. 3a and 3b, the attachment members 700c may be placed over assembled panels, holding the panels together and covering any gap between adjacent panels. The attachment members 700c may have attachment elements 708 that connect to connectors 300 and generate a force on the connectors 300, holding the panels together. When the panels are pushed together the fabric on each panel may compress and be held in this compressed position by the retention force provided by the attachment members 700c. In the case that a first panel is assembled with an edge adjacent a central part of a second panel, the retention force would be carried by an attachment element of a first portion of the attachment member 700c, and a wall of a U-shaped part of a second portion of the attachment member 700c. In the case that three panels are assembled with first and second panels assembled adjacently and a third panel assembled perpendicularly with an edge adjacent the interface between the first and second panels, the retention force would be carried by an attachment element of each leg of the attachment member 700c. Further, adjustable feet 900 are provided on the lower end to provide stability and adjustability to the surface on which the room divider system 100 rests, as disclosed in relation to Fig. 3a.

Fig. 4a shows a support 800 according to an embodiment. The support 800 has a rod 802 received in the first channel 241. Further, the support 800 has a foot 804 extending perpendicular to the extension of the rod 802 and perpendicular to the extension of the first sheet 210 and the second sheet 215 supporting the panel 200 in an upright position. The foot 804 can be provided with adjustable feet (not shown) in order to level out any unevenness in the floor, resulting in a vertically leveled position of the panel. For example, an adjustable foot 900, as described in relation to Fig. 4b, can be screwed into a corresponding portion of the foot 804.

Fig. 4b shows an adjustable foot 900 according to an embodiment. The adjustable foot 900 has a threaded rod 902 configured to be received in a corresponding part of a connector 300, profile 600 or attachment member 700 of the room divider system 100. The threaded rod 902 is configured such that rotation of each foot 900 changes its protrusion from underside of the panel 200. Further, the adjustable foot 900 has a foot 904 configured to support the panel 200 in an upright position.

Referring to Fig. 5a, a first embodiment of an attachment member 700 is shown. The attachment member 700a comprises a substantially elongate member having a generally U-shaped cross-section extending continuously along an axis. This allows the attachment member 700a to be placed over adjacently assembled panels, as shown in Fig. 3a, holding the panels together and covering the gap between adjacent panels. A first end 724 of the attachment member 700a is positioned to fit over a first panel. A second end 726 of the attachment member 700a is positioned to fit over a second panel. Thereby increased stability is provided to the connection between the two panels. The generally U-shaped cross-section of the attachment member 700a allows it to be configured to exert a clamping force on a respective panel when fit over the panel. The attachment member 700a may be elastically deformable, such that it can be deformed to fit over adjacently assembled panels, and then as it retakes its original form, it provides a clamping force on the panels in order to provide a secure connection. In some embodiments, the attachment member 700a is configured to be connectable to the top of the first and second panels by a snap-fit provided by the U-shaped cross-section of the attachment member 700a.

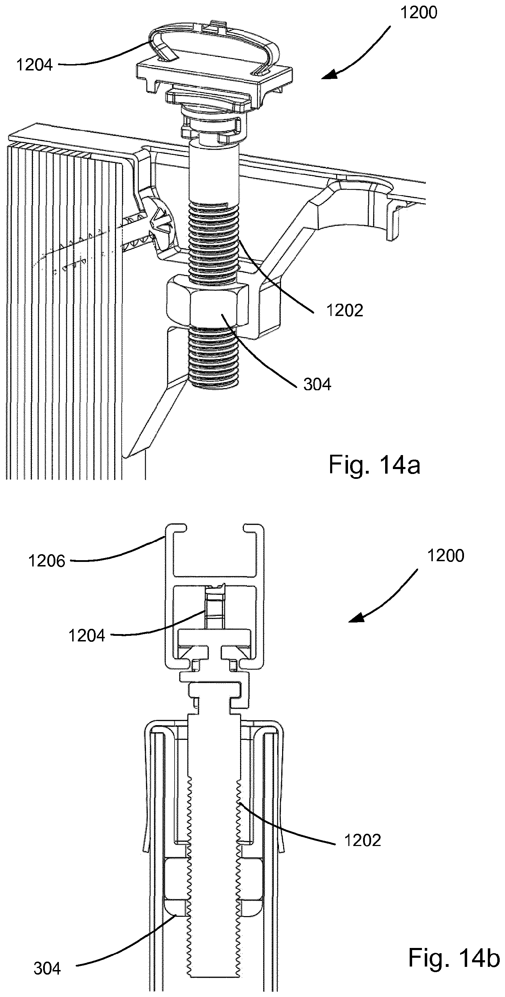

The attachment member 700a comprises a number of threaded portions 702 formed in the top surface 706 of the attachment member 700a. The threaded portions 702 may allow the attachment of an additional element comprising a corresponding thread that can be screwed into a threaded portion 702. An additional element may be, for example, an adjustable foot 900, or a suspension member 1200 as disclosed in relation to Figs. 14a and 14b.

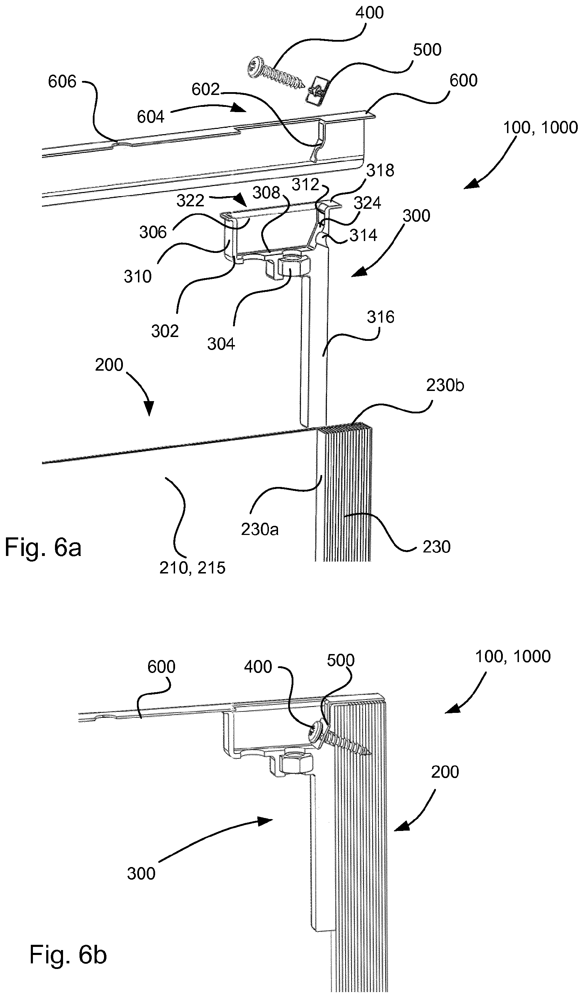

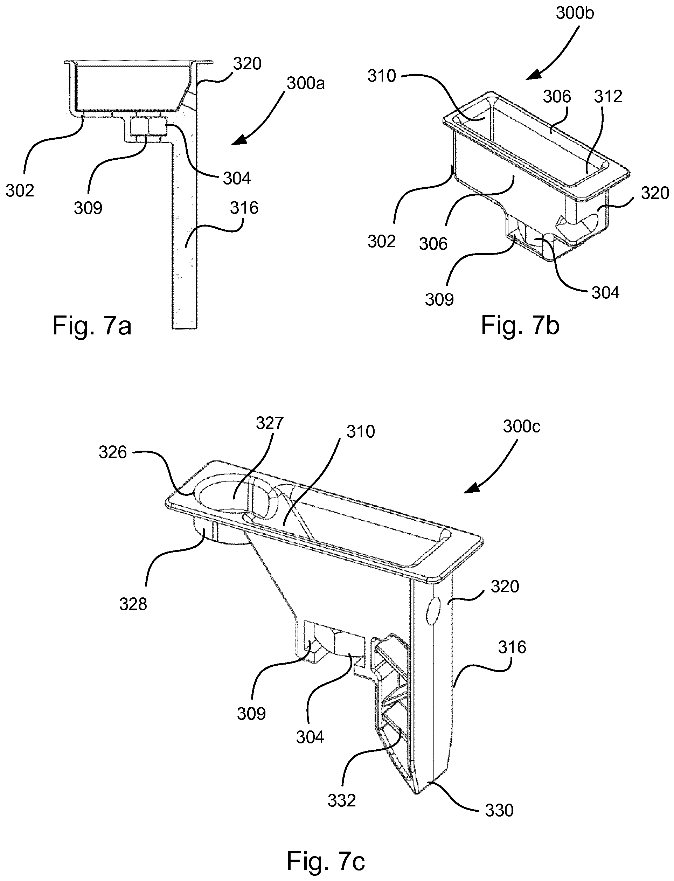

The attachment member 700a also comprises a number of holes 704 formed through its top surface 706. The holes 704 provide a gap for insertion of a fastening element (not shown). The fastening element can be connected to a connection element 304 of a connector 300 to fasten the attachment member 700a in place, as will be explained in relation to Figs 6 and 7. The holes 704 may alternatively provide a gap for insertion of an additional element that can be connected to a connection element 304 of a connector 300, for example, an adjustable foot 900, or a suspension member 1200.

The attachment member 700a additionally comprises a number of attachment elements 708 (not shown in Fig. 5a) configured to be inserted into a corresponding part of a connector 300. The structure and function of the attachment elements 708 will be described in more detail in relation to Fig. 5b. In some embodiments, the attachment member 700a comprises a threaded portion 702, a hole 704 and an attachment element 708 corresponding to each panel to which it will be attached. However, it will be appreciated that any combination of threaded portions 702, holes 704 and attachment elements 708 that enable a suitable function of the attachment member 700a may be implemented.

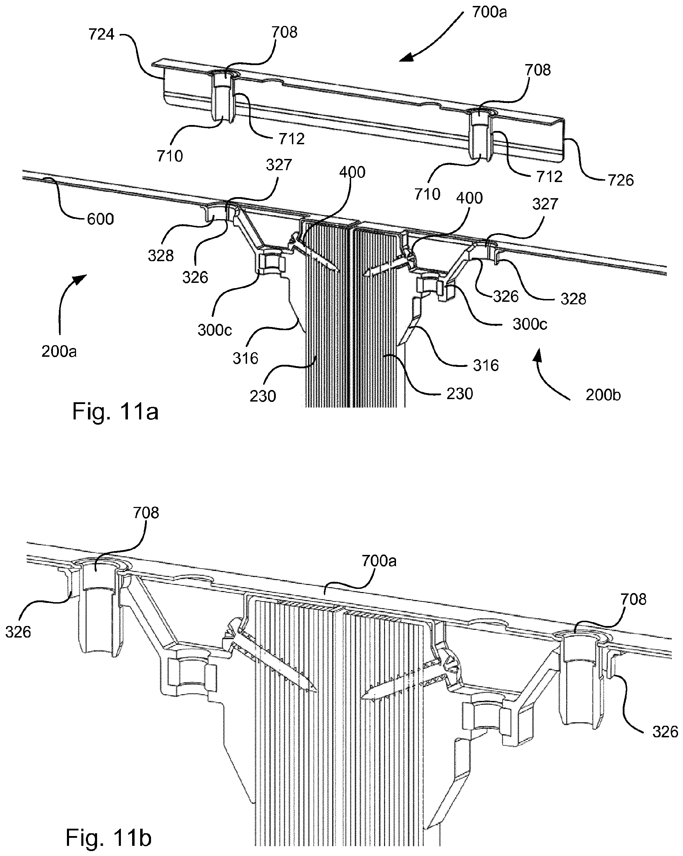

Referring to Fig. 5b, an attachment member 700a is shown in cross-section. As discussed above, the attachment member 700a comprises a number of attachment elements 708. The attachment elements 708 are configured to be inserted into a receiving portion associated with a respective panel, as will be discussed below. The receiving portion may be a connector receiving portion associated with a connector 300, or a profile receiving portion associated with a profile 600. The attachment elements 708 each comprise a generally cylindrical portion 710 that extends away from a top surface 706 of the attachment element 700a. In some embodiments, the generally cylindrical portion 710 may be open around at least part of its circumference, such that is has a half-pipe-like form. In some embodiments, the end of the attachment element 708 that is furthest from the top surface 706 of the attachment member 700a comprises a generally conical portion 711, to enable easier insertion into the receiving portion. The attachment elements 708 are configured to exert a retaining force on the receiving portion when inserted. This is achieved by a snap fit between the attachment element 708 and the receiving portion. The receiving portion may be configured to elastically deform when the attachment element 708 is inserted, and then as it retakes its original form, provide a retaining force on the attachment element 708 in order to provide a secure connection. Alternatively, the generally cylindrical portion 710 may be configured to elastically deform when inserted, and then as it retakes its original form, it provides a retaining force on the receiving portion. Each generally cylindrical portion 710 may also comprise a notch 712, such that the snap fit between the cylindrical portion 710 and the receiving portion is secured. The connection is held in place by engagement of the notch 712 with a corresponding part of the receiving portion, as will be explained in relation to Figs 6a, 6b, 7c and 11 to 13. This provides an additional or alternative means for connecting the attachment member 700a to the panels to which it is attached. For example, when the attachment elements 708 are used for connecting the attachment member 700a to a panel, the holes 704 are left free for connection of additional elements such as an adjustable foot 900, or a suspension member 1200. The position of the attachment elements 708 may correspond to that of the threaded portions 702. The cylindrical portion 710 of the attachment member may be configured to receive a part that can be screwed into the threaded portion 702. For example, the internal surface of the cylindrical portion 710 may also be threaded in order to receive a part with a corresponding thread. In this way, additional parts can be connected to the attachment member 700a. An example of an attachment member 700a assembled with a connector 300 is shown in Fig. 11a and 11b.

An attachment member 700 may have other shapes than the elongate form shown in Figs 5a and 5b. This may facilitate the assembly of panels 200 in different configurations, such as those shown in Figs 3b and 3c. Two examples of alternative attachment members 700 are shown in Figs 5c to 5f.

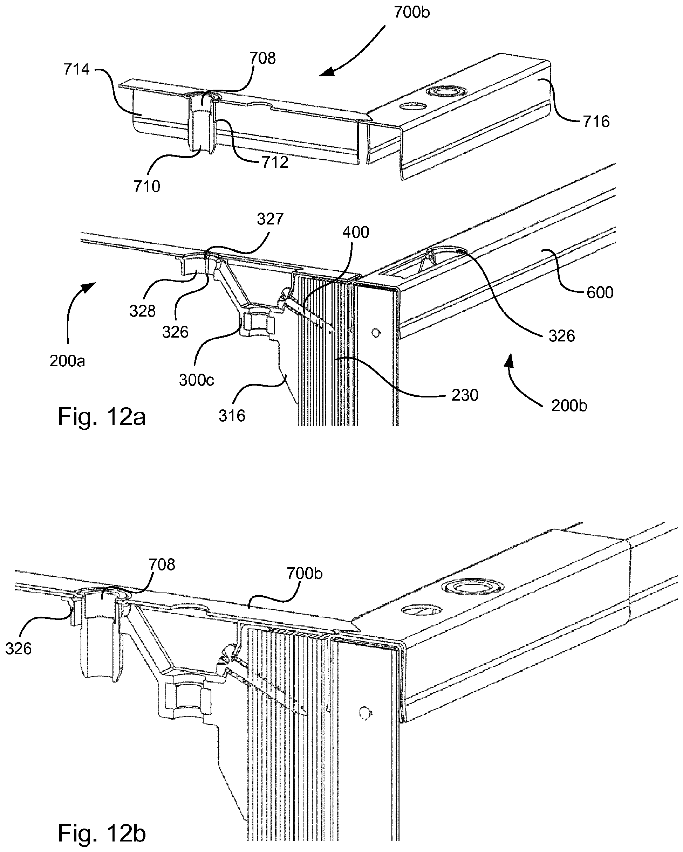

Referring to Fig. 5c, a third embodiment of an attachment member 700 is shown in partial cross-section. In this embodiment, the attachment member 700b has an L-shape. That is, the attachment member 700b comprises a first leg 714, shown in cross-section, and a second leg 716, joined at an apex 722 (shown in Figs 5d and 5e). In this embodiment, the legs 714, 716 are joined at a 90° angle. This allows two panels to be attached to each other perpendicularly as shown in Fig. 3b, with the first leg 714 to be attached to a first panel and the second leg 716 to be attached to a second panel. Similarly to the attachment member 700a shown in Figs 5a and 5b, the legs 714, 716 of the attachment member 700b have a generally U-shaped cross-section. In some embodiments the attachment member 700b of Fig. 5c comprises a threaded portion 702, a hole 704 and an attachment element 708 corresponding to each panel to which it will be attached. As such, each of the first leg 714 and the second leg 716 shown in Fig. 5c comprises a threaded portion 702, a hole 704 and an attachment element 708. However, it will be appreciated that any combination of threaded portions 702, holes 704 and attachment elements 708 that enable a suitable function of the attachment member 700b may be implemented. An example of an L-shaped attachment member 700b assembled with a connector 300 is shown in Fig. 12a and 12b.

The L-shaped attachment member 700b can be configured to fit different corner arrangements of panels 200, depending on how the panels are assembled. As shown in Fig. 5d, a first panel 200a is placed next to a second panel 200b at a right angle. The panels are placed such that a long side 240a of the first panel 200a is in contact with a short side 250b of the second panel 200b. This means that a receiving portion 326 of the first panel 200a, configured to receive an attachment element 708, is closer to the apex 260 of the assembly than a receiving portion 326 of the second panel 200b. As such, the attachment member 700b is configured such that the attachment element 708 of the first leg 714 (indicated in this case by the position of the corresponding threaded portion 702) is closer to the apex 722 of the attachment member 700b than the attachment element 708 of the second leg 716 (also indicated by the position of the corresponding threaded portion 702). It will be appreciated that the receiving portions 326 could equally be receiving portions 606 of profiles 600 attached to respective panels.

In Fig. 5e, a first panel 200a is placed next to a second panel 200b at a right angle, although the panels are now placed such that a short side 250a of the first panel 200a is in contact with a long side 240b of the second panel 200b. This means that the receiving portion 326 of the second panel 200b is closer to the apex 260 of the assembly than the receiving portion 326 of the first panel 200a. As such, the attachment member 700b is configured such that the attachment element 708 of the second leg 716 (indicated in this case by the position of the corresponding threaded portion 702) is closer to the apex 722 of the attachment member 700b than the attachment element 708 of the first leg 714 (also indicated by the position of the corresponding threaded portion 702). It will be appreciated that the attachment member 700b as shown in Figs 5c to 5e can be rotated as appropriate to fit corners of different orientations. It will be appreciated that the receiving portions 326 could equally be receiving portions 606 of profiles 600 attached to respective panels.

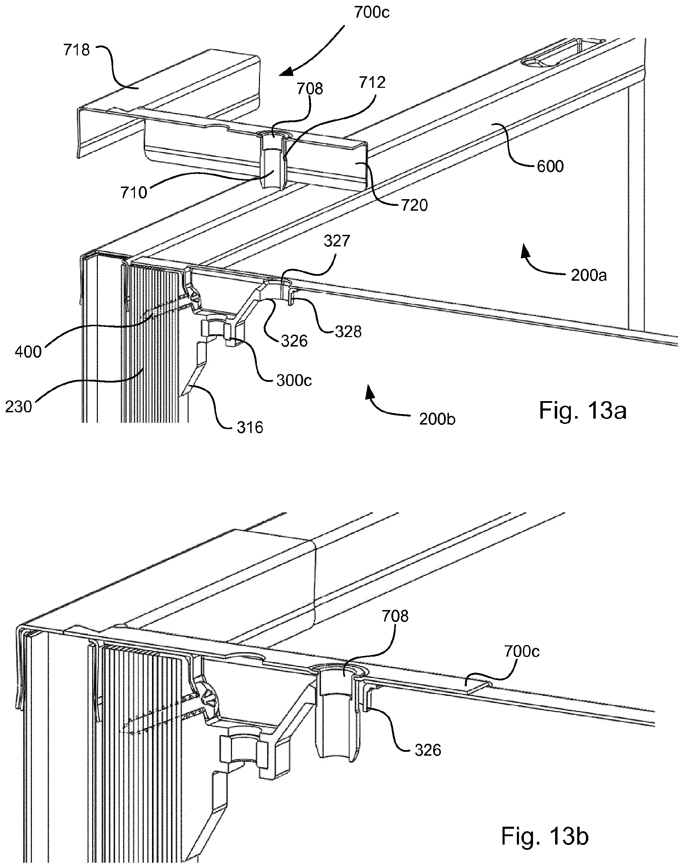

Referring to Fig. 5f, a fourth embodiment of the attachment member 700 is shown in cross-section. In this embodiment, the attachment member 700c has a T-shape. That is, the attachment member 700c comprises a first leg 718 and a second leg 720, wherein the second leg 720 is joined at one end to a central part of the first leg 718, at a 90° angle. It will be appreciated that, to form a T-shaped attachment member, the second leg 720 can be joined at one end to the first leg 718 anywhere between the two ends of the first leg 718. Fig. 5f shown a cross-section of the attachment member 700c through a central axis of the second leg 720. This configuration allows two panels 200 to be attached to each other perpendicularly at a central part of one of the panels, as shown in Fig. 3c, with the first leg 718 to be attached to a first panel and the second leg 720 to be attached to a second panel. In this embodiment, as the attachment member 700c is attached at a central part of the first panel, where no connector 300 or profile 600 is present, only the second leg 720 comprises a threaded portion 702, a hole 704 and an attachment element 708. However, it will be appreciated that any combination of threaded portions 702, holes 704 and attachment elements 708 that enable a suitable function of the attachment member 700c may be implemented. An example of a T-shaped attachment member 700c assembled with a connector 300 is shown in Fig. 13a and 13b.

In some embodiments, the attachment member 700c may be configured to attach to three panels 200. In these embodiments, the first leg 718 may comprise two attachment elements 708 at each end. The two attachment elements 708 may be configured to attach to two separate panels arranged adjacently along the axis of the first leg 718. The second leg 720 may then be attached to a third panel arranged perpendicularly to the first and second panels.

The different types of attachment member shown in Figs 5a to 5f allow panels to be assembled in different configurations to form different types of divider, for example as shown in Figs 3a to 3c. It will be envisaged by the skilled person that different types of attachment member can be used to create different configurations. For example, in some embodiments, an X-shaped attachment member 700 could be provided to attach four panels assembled at right angles to each other, or two panels assembled either side of and perpendicular to a third panel. In some embodiments, the attachment member 700 may be implemented with legs disposed at any suitable angle, for example an attachment member 700 having a 45° bend. In some embodiments, the attachment member 700 may comprise a hinge such that it is adjustable.

As is understood, each support 800 and/or each attachment member 700a-d and/or each adjustable foot 900 needs to be securely attached to each panel 200. The room divider system 100 shown in Figs 6a and 6b achieves this by providing an interface 1000 comprising a connector 300 attachable to a lath 230 of each panel 200. Fig. 6a shows an exploded view of the room divider system 100, while Fig. 6b shows a room divider system 100 having the interface 1000 mounted to the panel 200. The interface 1000 comprises a connector 300 attachable to the lath 230 by means of a fastener 400. The interface 1000 may further comprise a profile 600 and/or a washer 500.

As shown in Fig. 6a, a connector 300 is attached to the short side 230b of a lath 230. The connector 300 is attached by means of a fastener 400, such as a screw, inserted into the lath 230, e.g. the first lath 231. Further, another connector 300 may be attached to the second lath 232 at an end of the second lath 232. However, the connector 300 may be attached to any of the laths 230, 231, 232, 233, 234, 235, 236 of the panel 200. In the embodiment shown in Fig. 1b, connectors 300 may preferably be attached to the first lath 231 and to the second lath 232, respectively.

In Fig. 6a, the connector 300 is depicted as a part of an interface 1000 of the room divider system 100. The connector 300 forms a rigid structure for attaching associated equipment to the panel, as it is at least partially inserted in the cavity that is formed between the first and second sheets 210, 215 of the panel 200 and then securely attached to a sidewall 230a of the lath 230. Preferably, a connector 300 is arranged on the first and second laths 230 that are arranged along the edges 211, 216 of the panel 200. Connectors 300 may also be arranged on third and fourth laths 233, 234, or on any other lath 230, 233, 234, on the panel 200. The fastener 400 attaches the connector 300 to the lath 230 through an opening 314 in an inclined surface 324 on a main portion 302 of the connector 300. The main portion 302 is essentially cuboid in shape, and preferably corresponds essentially in width to the distance between the sheets 210, 215. The main portion 302 hence comprises a bottom wall 308 having an essentially rectangular shape, and extending perpendicularly therefrom are four sidewalls 306, 310, 312. An opening 322 is arranged opposite the bottom wall 308, which allows access to the inside of the main portion 302 including the fastener 400 when attached. The sidewall 312 is configured to be arranged adjacent to the lath 230, and the bottom wall 308 and the vertical interior surface of the sidewall 312 are separated by the inclined surface 324. The inclined surface 324 forms the part of the sidewall 312 closest to the bottom wall 308. A rear surface is 320 arranged on the other side of the wall 312 in relation to the inclined surface 324, and is intended to face the sidewall 230a of the lath 230. The rear surface 320 is configured to abut against the sidewall 230a of the lath 230 when the connector 230 is mounted thereto.

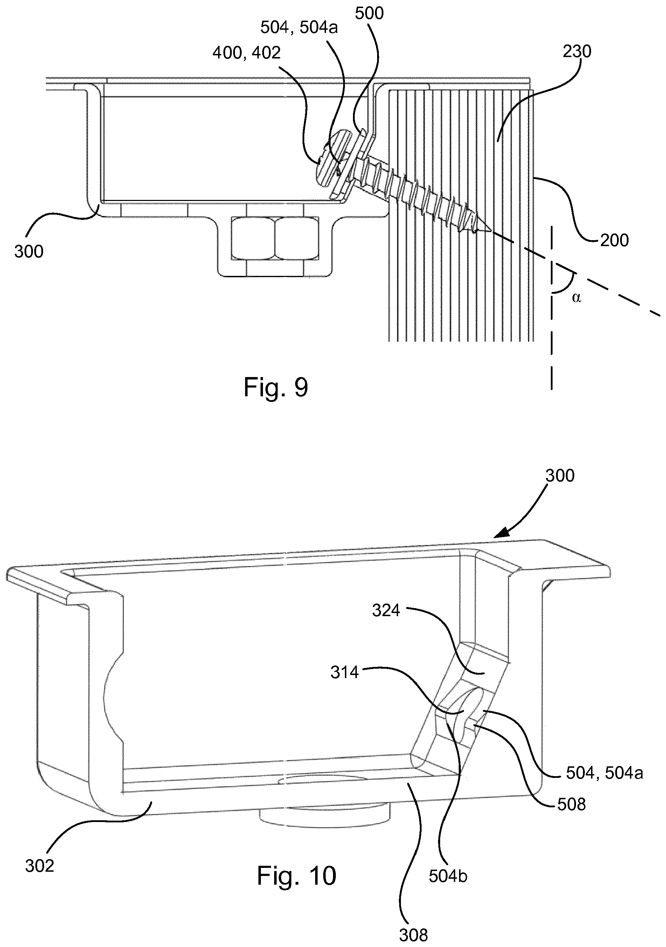

The opening 314 in the inclined surface 324 preferably extends essentially perpendicularly to the inclined surface 324 to the other side of the wall 312 and hence through to the rear surface 320. Therefore, the fastener 400, which preferably is a screw, will be screwed into the lath 230 at angle α (shown in Fig. 9) in relation to the longitudinal extension of the lath 230. The angle α is preferably larger than 0°, more specifically larger than 45°, such as larger than 45° and up to 75°, and in one embodiment approximately 60°. In other words, the inclined surface 324 faces upwards against the opening and towards the upper edge adjacent to the opening 322 of the wall 310 opposite the inclined surface 324. The fastener 400 will hence be arranged such that the head 402 thereof is more easily reached with an appropriate tool, such as a screwdriver, through the opening 322. The upper edge adjacent the opening 322 of the sidewall 310 may be used as a support for a screwdriver, facilitating correct alignment with the fastener 400. Another advantage of the inclined surface 324 and the resulting angled fastener arrangement is that a longer fastener 400 may be used without penetrating through the other side of the lath 230, thereby increasing the load that can be exerted on the connector 300.

A connection element 304 is arranged in the bottom wall 308 of the main portion 302 of the connector 300. The bottom wall 308 may comprise a cavity 309, shown in Figs 7a to 7c, for receiving the connection element. The connection element 304 is preferably a nut, but may just as well be any other type of connector or simply a thread arranged in the bottom wall 308. The connection element 304 is also accessible through the opening 322 in the connector 300, and hence serves as a connection point, for instance for connecting a fastening element for an attachment member 700, an adjustable foot 900, or a suspension member 1200.

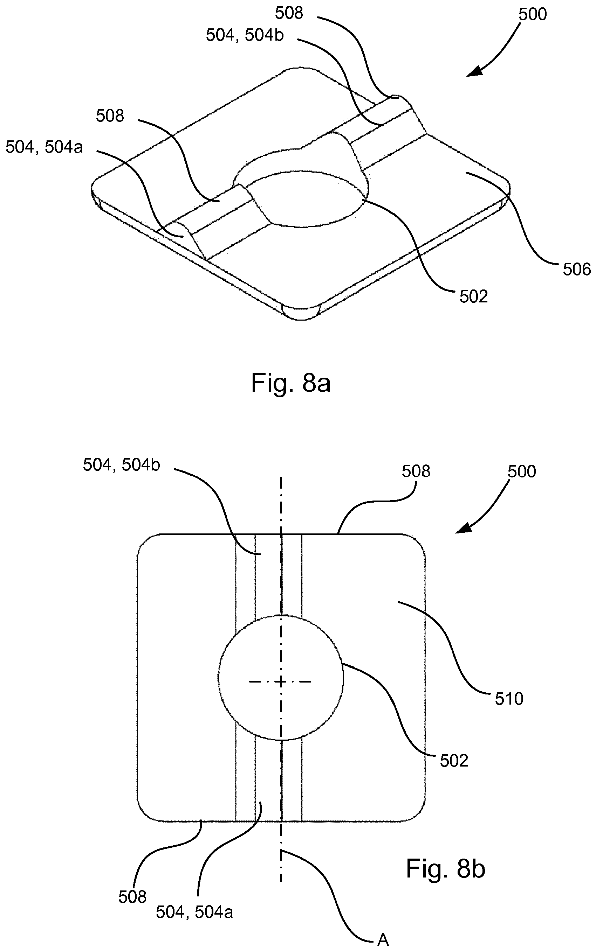

Seeing as the lath 230 optionally comprises a number of strips 238 of material through which the fastener 400 must penetrate, certain problems arise. One problem is that, when attaching a screw type fastener at an angle that is not 90° to the surface of such a lath 230, the fastener will have a tendency to align with the longitudinal direction of the strips 238. This may result in the angle α decreasing and deviating from the desired angle to an unacceptable degree. Hence, a washer 500 is provided which mitigates this effect. The washer 500, as is shown in Figs 6a and 6b, is configured to be arranged adjacent to the fastener 400, the head 402 of the fastener 400 providing a compressing force to one side of the washer 500. As will be further explained in relation to Figs 8 to 10, the washer 500 comprises features that are configured to counter the possible effect of the strips 238 that constitute the lath 230.

What is also shown in Figs 6a and 6b is an optional profile 600, having a U-shaped cross-section and a flange 602 that is attachable by means of the fastener 400 to the connector 300. The profile 600 is connectable to each side of the panel 200 to protect and cover the openings that would otherwise be visible between the sheets 210, 215, thus serving as a trim piece. The profile 600 hence allows an end user to cut/modify the panel 200 and afterwards attach the profile 600, which will cover the cut. The profile 600 thus facilitates modification, as it will cover any eventual uneven cuts in the panel 200.

The profile 600 further comprises an opening 604 which essentially corresponds in shape with the opening 322 in the connector, and which is configured to be aligned with the opening 322 when mounted to the panel 200. Furthermore, as each panel 200 may be fitted with a connector 300 on two or more laths 230, which are all covered by a single profile 600, each profile 600 preferably comprises the same number of openings 604 as the number of possible connectors 300. The profile 600 may serve as a connector for the support 800 or for adjustable feet 900.

The profile 600 further comprises a receiving portion 606. The profile receiving portion 606 is configured to receive an attachment element 708 of an attachment member 700a-c. As discussed in relation to Fig. 5b, the attachment elements 708 are configured to be inserted into a profile receiving portion 606. The attachment elements 708 are configured to exert a retaining force on the profile receiving portion 606 when inserted. This is achieved by a snap fit between the attachment element 708 and the profile receiving portion 606. The profile receiving portion 606 may be configured to elastically deform when the attachment element 708 is inserted, and then as it retakes its original form, provide a retaining force on the attachment element 708 in order to provide a secure connection. Alternatively, the generally cylindrical portion 710 may be configured to elastically deform when inserted, and then as it retakes its original form, it provides a retaining force on the profile receiving portion 606. Each generally cylindrical portion 710 may also comprise a notch 712, such that the snap fit between the cylindrical portion 710 and the profile 600 is secured. The connection is held in place by engagement of the notch 712 with the profile receiving portion 606. This provides an additional or alternative means for connecting the attachment member 700a to the panels to which it is attached.

Furthermore, as can be made out from Fig. 6b, the connector 300 is configured to be arranged adjacent to a short side 230b of the lath 230. It is to be understood that while only one short side 230b of one lath 230 is shown, the other opposite short side 230b of each lath 230 may also be fitted with a connector 300. Further, the connector may not only be attached to the end of the lath, but also to the first sheet 210 and/or the second sheet 215. This may serve to provide a stronger attachment of the connector. This may be beneficial, especially in embodiments wherein the connector not is attached to the lath by means of a fastener 400. The attachment of the connector to the first sheet and/or the second sheet may be by means of an adhesive and/or by ultrasonic welding.

In order to relieve some of the load that is exerted on the fastener 400, and increase the load capability of the connector 300, especially in the longitudinal direction of the lath 230, a lip 318 may be provided. The lip 318 protrudes from the wall 312, more specifically the upper edge thereof adjacent to the opening 322. The lip 318 protrudes outwards from the rear surface 320 in the direction of the lath 230, such that it may be arranged abutting against the short side 230b of the lath 230.

Referring now to Fig. 7a, one embodiment of a connector 300 is shown. The connector 300a comprises a cavity 309 into which a connecting element 304 can be fitted. The main portion 302 of the connector 300a, including the cavity 309, can be formed by injection molding. The connecting element 304 can then be inserted into the cavity 309 for connecting a fastening element for an attachment member 700, an adjustable foot 900, or a suspension member 1200. The connector 300a is preferably made out of a polymeric material such as a plastic material. It may however also be made from a metallic material such as aluminum.

The connector 300a also comprises a supporting bar 316 configured to extend in the longitudinal direction of the lath 230 between the first and second sheets 210, 215 of the panel 200, as shown in Figs 6a and 6b. As shown in Fig. 7a, the supporting bar 316 essentially extends the rear surface 320 downwards away from the main portion 302 of the connector 300a. The supporting bar 316 serves to improve the stability the connector 300a as it distributes an eventual rotating force, a torque applied on the connecting element 304, over a larger surface area on the sheets 210, 215 as well as on the lath 230. The supporting bar 316 hence preferably has a width corresponding to that of the main portion 302 and hence also to the distance between the sheets 210, 215.

In one embodiment of the room divider system 100, each connector 300 that is configured to be arranged along a bottom edge 206 of the panel 200 comprises a supporting bar 316. The bottom edge 206 (shown in Fig. 3a) is usually subjected to higher loads, especially if the room divider system 100 is arranged standing on the floor. For instance, if a force is applied perpendicularly to a sheet 210, 215 of a panel 200 that is standing upright, such a force will be received as a torque on each connector 300a connected to the panel 200. However, connectors 300 arranged along a top edge 207 may also comprise a supporting bar 316.

In Fig. 7b, another embodiment of a connector 300 is shown. The connector 300b comprises a main portion 302 identical to that of the embodiment shown in Fig. 7a, with the exclusion of the supporting bar 316. The connector 300b shown in Fig. 7b is beneficial for use in applications when it can be predicted that the connector 300 will not be subjected to high torque loads, and hence can material be saved by omitting the supporting bar 316. For instance, such a connector 300b is suitable to use on each lath 230 along the upper edge 207 (shown in Fig. 3a) of the panel(s) 200. The connector 300b is preferably made out of a polymeric material such as a plastic material. It may however also be made from a metallic material such as aluminum.

In Fig. 7c, another embodiment of a connector 300 is shown. The connector 300c comprises a main portion 302 similar to that of the embodiment shown in Fig. 7a, although an additional receiving portion 326 is provided. The connector receiving portion 326 is attached to and extends from the sidewall 310 of the main portion 302. In this embodiment, the sidewall 310 is inclined at an angle with respect to the rear surface 320 of the connector 320. The connector receiving portion 326 comprises a hole 327 and a sleeve portion 328. As discussed in relation to Fig. 5b, the attachment elements 708 are configured to be inserted into a connector receiving portion 326. The attachment elements 708 are configured to exert a retaining force on the connector receiving portion 326 when inserted. This is achieved by a snap fit between the attachment element 708 and the connector receiving portion 326. The connector receiving portion 326 may be configured to elastically deform when the attachment element 708 is inserted, and then as it retakes its original form, provide a retaining force on the attachment element 708 in order to provide a secure connection. Alternatively, the generally cylindrical portion 710 may be configured to elastically deform when inserted, and then as it retakes its original form, it provides a retaining force on the connector receiving portion 326. Each generally cylindrical portion 710 may also comprise a notch 712, such that the snap fit between the cylindrical portion 710 and the connector 300 is secured. The bottom edge of the sleeve portion 328 may engage with the notch 712 of the attachment element 708 to ensure a secure connection. The hole 327 of the connector receiving portion 326 may be substantially elliptical in cross-section, in order to provide some tolerance for the alignment of the attachment member 700 and insertion of the attachment element 708. Alternatively, the connector receiving portion 326 may be implemented having an open profile. That is to say, the hole 327 and the sleeve portion 328 are only partially closed forming a half-pipe-like shape. In this way, increased tolerance is provided for the alignment of the attachment member 700 and insertion of the attachment element 708 whilst still providing engagement surfaces for the attachment element 708.

Furthermore, the supporting bar 316 of the connector 300c in the embodiment of Fig. 7c may also be different from that shown in the embodiment of Fig. 7a. In this embodiment, similar to that of Fig. 7a, the supporting bar 316 essentially extends the rear surface 320 downwards away from the main portion 302 of the connector 300. However, the supporting bar 316 of this embodiment is tapered along its extension to meet at a bottom edge 330. This taper allows the connector 300c to be inserted in the cavity that is formed between the first and second sheets 210, 215 of the panel 200 and alongside the sidewall 230a of the lath 230 without compressing the distance members 220 of the panel 200. By providing a taper, the connector 300c can be inserted between the first and second sheets 210, 215 more smoothly. The supporting bar 316 of the connector 300c may also comprise a number of slats 332. This construction gives the supporting bar 316 sufficient structural integrity, whilst also reducing material requirements and the overall weight of the connector 300c. It will be appreciated that such a construction could also be used in the supporting bar 316 of the connector 300a shown in Fig. 7a. The connector 300c is preferably made out of a polymeric material such as a plastic material. It may however also be made from a metallic material such as aluminum.

Turning now to Figs 8a and 8b, the washer 500 is shown. The washer 500 is, as mentioned, configured to be arranged against the inclined surface 324. Naturally, in order to receive the fastener 400, the washer 500 further comprises a hole 502. The hole 502 is to be aligned with the opening 314 in the inclined surface 324. In order to prevent the fastener 400 attaining an undesired angle α, the washer 500 comprises at least one hill 504 on the surface 506 of the washer 500 configured to face away from the inclined surface 324, i.e. on the surface 506 which is configured to face the head 402 of the fastener 400. The top 508 of the at least one hill 504 is arranged only on one side of a line A parallel with the surface 506 and extending through the center of the hole 502. Thereby a non-symmetric contact area is formed between the washer 500 and the fastener 400. The top of the hill 504 is pressed against the head 402 of the fastener 400 forming a torque that counters the effect that the strips 238 of material in the lath 230 have on the fastener 400. As is shown, the washer 500 may comprise two hills 504a, 504b that are separated by the hole 502. Furthermore, the washer 500 may have a rectangular shape. Preferably, the washer 500 has a shape that corresponds to the shape of the inclined surface 324 such that, when placed against the inclined surface 324, it is held in place so that it will not rotate in relation to the connector 300. This is important as it serves to keep the hills in the correct position in relation to the connector 300 as will be further explained below.

In order to achieve the desired effect from the washer 500, it should preferably be arranged such that the line A is essentially parallel with the bottom wall 308 and such that the top 508 of the at least one hill 504 is arranged on the side of the washer 500 defined by the line A being closest to the bottom wall 308. That is to say, if the line A divides the washer 500 into two sides, the washer 500 should be arranged such that the side that comprises the top 508 of the hills 504 is closest to the bottom wall 308. This arrangement is shown in Fig. 9, where the at least one hill 504 is shown being arranged below the longitudinal axis of the fastener 400, i.e. closer to the bottom wall 308 in the connector 300. In the manner with which the fastener 400 is arranged in relation to the lath 230 in Fig. 9, it will have a tendency to reduce the angle α as it is being screwed through the strips 238. The top 508 of the hill 504 pushes against the head 402 such that a countering torque is formed, hence mitigating the natural tendency of the fastener 400 to deviate from the desired angle α. The washer 500 is preferably made out of a metallic material such as steel or aluminum, but it may also be made from a polymeric material such a plastic material.

In one embodiment shown in Fig. 10, in which no separate washer 500 is used, the washer is integrated in the inclined surface, i.e. the hills 504, 504a, 504b may instead be arranged on the inclined surface 324. The top 508 of the hills 504a, 504b is to be arranged in the manner that is described in relation to the separate washer 500, i.e. such that the top 508 is arranged below the center axis of the hole 314, i.e. closer to the bottom wall 308.

Figs 11a and 11b show an elongate attachment member 700a, as shown in Figs 5a and 5b, being assembled onto two adjacent panels 200a-b using respective connectors 300. Fig. 11a is an exploded cross-section view of a room divider system comprising an elongate attachment member 700a according to one embodiment. As described in relation to Figs 6a and 6b, a connector 300 is attached to a lath 230 of each panel 200 by a fastener 400. In this case, the connector is a connector 300c as shown in Fig. 7c. A profile 600 may be connected to the top edge of each panel 200, serving as a trim piece. A first end 724 of the attachment member 700a is positioned to fit over a first panel 200a. A second end 726 of the attachment member 700a is positioned to fit over a second panel 200b. As such, the attachment elements 708 are positioned generally in line with the receiving portions 326 of the connectors 300c present in each panel 200. When attached, the attachment elements 708 will pass through the holes 327 in the connector receiving portions 326, thus providing a snap fit, and the notches 712 of the attachment elements 708 will engage the bottom edge of the sleeve portions 328 of the connector receiving portions 326. Fig. 11b is a perspective cross-section view of an assembled room divider system comprising an elongate attachment member 700a. As is shown, the attachment element 708 is engaged with the connector receiving portion 326 in a snap fit, securing the attachment member 700a in place. When assembled, the attachment member 700a holds the panels together and covers the slit between the two panels that can be seen in Fig. 11a. By pushing the panels together, sound is essentially prevented from passing between them, as the gap has been closed. Further, the stability of an assembled room divider system is improved once the panels are pressed together, as they form a common block.

Figs 12a and 12b show an L-shaped attachment member 700b, as shown in Fig. 5c, being assembled onto two perpendicular panels 200a-b using respective connectors 300. Fig. 12a is an exploded cross-section view of a room divider system comprising an L-shaped attachment member 700b according to one embodiment. A connector 300c is attached to a lath 230 of each panel 200 by a fastener 400. A profile 600 may be connected to the top edge of each panel 200, serving as a trim piece. The first leg 714 of the attachment member 700b is positioned to fit over a first panel 200a. The second leg 716 is positioned to fit over a second panel 200b. As such, the attachment elements 708 are positioned generally in line with the receiving portions 326 of the connectors 300c present in each panel 200. When attached, the attachment elements 708 will pass through the holes 327 in the connector receiving portions 326, thus providing a snap fit, and the notches 712 of the attachment elements 708 will engage the bottom edge of the sleeve portions 328 of the connector receiving portions 326. Fig. 12b is a perspective cross-section view of an assembled room divider system comprising an L-shaped attachment member 700b. As is shown, the attachment element 708 is engaged with the connector receiving portion 326 in a snap fit, securing the attachment member 700b in place. When assembled, the attachment member 700b holds the panels together and covers the slit between the two panels that can be seen in Fig. 12a. By pushing the panels together, sound is essentially prevented from passing between them, as the gap has been closed. Further, the stability of an assembled room divider system is improved once the panels are pressed together, as they form a common block.

Figs 13a and 13b show a T-shaped attachment member 700c, as shown in Fig. 5d, being assembled onto two perpendicular panels 200a-b using respective connectors 300. Fig. 13a is an exploded cross-section view of a room divider system comprising a T-shaped attachment member 700c according to one embodiment. A connector 300c is attached to a lath 230 of each panel 200 by a fastener 400. A profile 600 may be connected to the top edge of each panel 200, serving as a trim piece. The first leg 718 of the attachment member 700c is positioned to fit over a central part of a first panel 200a. The second leg 720 is positioned to fit over an end part of a second panel 200b. As only the second leg 720 is to be attached to a connector 300c of a panel, only the second leg 720 comprises an attachment element 708. The attachment element 708 is positioned generally in line with the receiving portion 326 of the connectors 300c present in the second panel 200b. When attached, the attachment elements 708 will pass through the hole 327 in the connector receiving portion 326, thus providing a snap fit, and the notch 712 of the attachment element 708 will engage the bottom edge of the sleeve portion 328 of the connector receiving portion 326. Fig. 13b is a perspective cross-section view of an assembled room divider system comprising a T-shaped attachment member 700c. As is shown, the attachment element 708 is engaged with the connector receiving portion 326 in a snap fit, securing the attachment member 700c in place. When assembled, the attachment member 700c holds the panels together and covers the slit between the two panels that can be seen in Fig. 13a. By pushing the panels together, sound is essentially prevented from passing between them, as the gap has been closed. Further, the stability of an assembled room divider system is improved once the panels are pressed together, as they form a common block.

Fig. 14a shows a suspension member 1200 for use in a room divider system with a sliding door according to one embodiment. The suspension member 1200a comprises a connection part 1202 and a suspension part 1204. The connection part 1202 allows the suspension member 1200 to be attached to a connection element 304 arranged in the bottom wall 308 of the main portion 302 of the connector 300, as discussed above. In this embodiment, the connection part 1202 is a bolt and the connection element 304 is a nut, but any suitable type of connection may be formed between the connector and the suspension member 1200. The connection element 304 is accessible through the opening 322 in the connector 300. Although not shown in Fig 14a, the connection element 304 is also accessible through a hole 704 in an attachment element 700. The suspension part 1204 is configured to be attached to a rail 1206 (shown in Fig. 14b) that is attached to a wall or ceiling of a room. The suspension part 1204 may be slidably attached to the rail such that the panel can be slid along the rail to provide a sliding room divider, such as a sliding door.

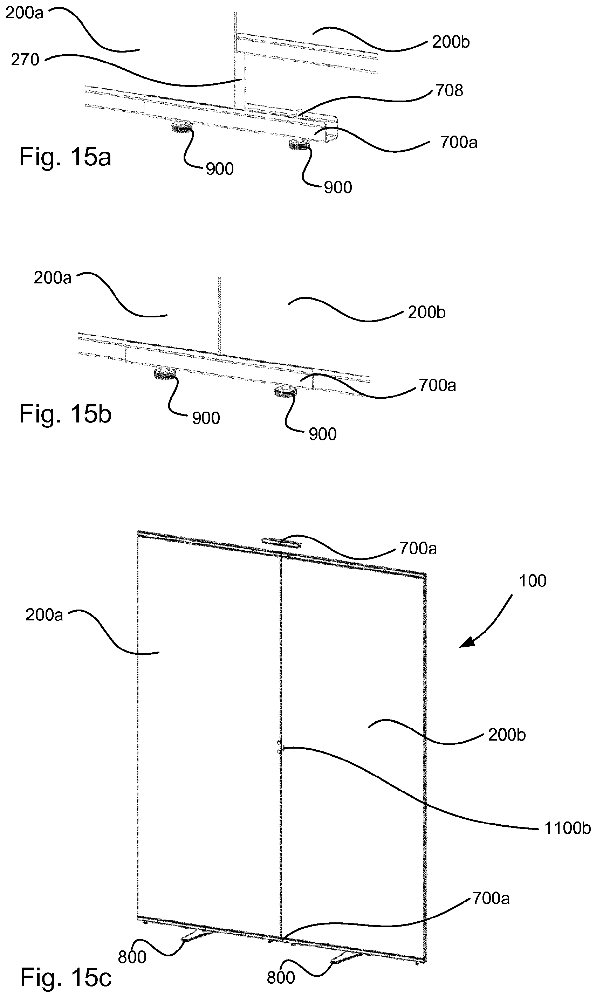

Fig. 15a to Fig. 15c show the assembly of a first panel 200a next to a second panel 200b into room divider system 100. As shown in Fig. 15a, the first panel 200a is firstly positioned in an upright position on the floor. Before positioning the first panel 200a on the floor, an elongate attachment member 700a (shown in Figs. 5a and 5b) is attached to a lower corner of the first panel 200a. The lower elongate attachment member 700a may be connected to the first panel 200a via a connector 300 or a profile 600 (not shown), as has been described herein above, e.g. in relation to Figs 11a-b. The lower elongate attachment member 700a may be provided with adjustable feet 900. Once positioned in an upright position on the floor, an attachment element 708 of the first attachment member 700a is accessible from above, as can be seen on the right-hand side of Fig. 15a. In order to allow for assembly of a room divider system 100 comprising several panels 200, it is important that panels 100 may be assembled in an upright position. Furthermore, it also advantageous that an adjustable foot 900 may be positioned on the floor before positioning a panel 200 on top of it, as it would be difficult to mount the adjustable foot 900 after assembly of the panels.

In assembling the first panel 200a and the second panel 200b into room divider system 100, the second panel 200b is positioned next to the first panel 200b above the attachment element 708, as shown in Fig. 15a. In positioning the panels 200a, 200b next to each other, an assembly support 1100b is positioned in between them (Fig. 16b shows a close up of the support 1100b). The assembly support 1100b has two U-profile like portions facing in opposite directions. The U-profile like portions are arranged on the same base plate, i.e. the parallel sides in the U-profile like portions extend from the same base plate.

Subsequently, the second panel 200b is moved downwards such that the attachment element 708 engages with a connector 300 or profile 600 (not shown) of the second panel 200b, thereby retaining the lower ends of the first and second panels (200a, 200b) in an assembled position, as shown in Fig. 15b. In this position, the assembly support 1100b prevents the second panel 200b from falling over, as the first U-profile like portion engages with the first panel 200a and the second U-profile like portion engages with the second panel 200b.

In order to retain the upper ends of the first and second panels 200a, 200b in an assembled position, a second elongate attachment member 700a is attached to an upper connector 300 or profile 600 of each panel 200a, 200b, according to the principle described above with reference to Figs 11a-b. Before attaching the second elongate attachment member 700a, the first and second panels 200a, 200b are pushed together, as shown in Fig. 15c, to compress the fabric 270 (cf. Fig. 15a) folded over a lath 230 (not shown) of the hollow board material of the first panel 200a. The fabric 270 folded over the lath 230 is shown in Fig. 2b. The fabric 270 of the second panel 200b is also compressed. Fig. 15c hence illustrates the situation just before attaching the attachment member 700a.

Also shown in Fig. 15c are supports 800. The supports add additional stability to the assembled room divider system 100. During assembly, only one support 800 may be present, for example on the first panel 200a, in order to allow the first panel 200a to stand alone while the second panel 200b is being assembled. This makes the assembly process easier.

As each panel 200 may comprise several laths 230, 231, 232, 233, 234, 235, 236, each panel 200 may be fitted with several interfaces 1000. These may be mounted during manufacture, or be mountable by the costumer.

The hollow board material may be produced as disclosed in WO 2012/048738, which is incorporated in its entirety by reference. The fabric may be coated on the hollow board material after being assembled. Alternatively, the fabric may be coated on the sheets before being assembled. According to an embodiment, the non-woven fabric is a carded and cross-lapped, needle punched non-woven fabric. Preferably, the non-woven fabric is thermally bonded as well. According to an alternative embodiment, the fabric is a non-woven spunbond fabric. A non-woven spunbond fabric may be spun directly onto the sheet, before, or after, being assembled into hollow board material.

Without further elaboration, it is believed that one skilled in the art may, using the preceding description, utilize the present invention to its fullest extent. The preceding preferred specific embodiments are, therefore, to be construed as merely illustrative and not limitative of the disclosure in any way whatsoever.

Although the present invention has been described above with reference to specific embodiments, it is not intended to be limited to the specific form set forth herein. Rather, the invention is limited only by the accompanying claims and other embodiments than those specifically described above are equally possible within the scope of these appended claims, e.g. different embodiments than those described above.

In the claims, the term "comprises/comprising" does not exclude the presence of other elements or steps. Additionally, although individual features may be included in different claims, these may possibly advantageously be combined, and the inclusion of two features in different claims does not imply that a combination of those features is not feasible and/or advantageous.

In addition, singular references do not exclude a plurality. The terms "a", "an", "first", "second" etc. do not preclude a plurality.

## Claims

1. A room divider panel (200), said panel comprising a hollow board material with a first sheet (210) and a second sheet (215), wherein a plurality of distance members (220) are arranged between the first sheet (210) and the second sheet (215), the plurality of distance members (220) being connected to the first sheet (210) and to the second sheet (215), respectively, wherein a first and a second lath (231, 232), each comprising a plurality of strips (238) arranged on top of each other, are arranged in parallel between the first sheet (210) and the second sheet (215) along opposite edges of the hollow board material, the first and second lath (231, 232) being connected to the first sheet (210) and to the second sheet (215), respectively, thereby providing a hollow board material, and wherein at least one of the first and the second sheet (210, 215), at the outer surface, is covered with a fabric (270) to provide a room divider panel (200).

2. The panel (200) according to claim 1, wherein the fabric (270) is a non-woven fabric; the non-woven fabric preferably being a carded, and optionally cross-lapped, needle punched non-woven fabric.

3. The panel (200) according to claim 2, wherein the non-woven fabric comprises a melt fiber, such as 10 to 50 wt.% melt fibers, the non-woven fabric being thermally bonded.

4. The panel (200) according to any one of claims 1 to 3, wherein the non-woven fabric is a non-woven fabric of polyester, such as recycled polyester; preferably the non-woven fabric of polyester having a surface weight of 50 to 500 gsm (g/m²), such as 100 to 400 gsm (g/m²) or 150 to 300 gsm (g/m²),
preferably wherein the non-woven fabric of polyester comprises 50 to 90 wt.% staple fibers of polyester, and 10 to 50 wt.% melt fibers, the non-woven fabric of polyester being a carded, and optionally cross-lapped, needle punched and thermally bonded, non-woven fabric having a surface weight of 50 to 500 gsm (g/m²), such as 100 to 400 gsm (g/m²) or 150 to 300 gsm (g/m²); preferably the staple fibers having a linear density of 2 to 12 dtex (grams per 10 km), such as 4 to 10 dtex, and the melt fibers having a linear density of 1 to 8 dtex, such as 2 to 6 dtex.

5. The panel (200) according to any of the claims 1 to 4, wherein the distance members (220) are strips arranged perpendicular to the extension of the first and second sheets (210, 215); preferably the strips being arranged in a meandering pattern.

6. The panel (200) according to any of the claims 1 to 5, wherein
- the first and second sheets (210, 215) comprises lignocellulosic fibers; and/or
- the first and second laths (231, 232) comprises lignocellulosic fibers; and/or
- distance members (220) comprises lignocellulosic fibers,
preferably wherein:
- the first and second sheets (210, 215) are sheets of a particle board, fiber board, MDF board, HDF board, or paper board; preferably the first and second sheets (210, 215) are sheets of paper board; and/or
- the first and second laths (231, 232) are laths of a particle board, fiber board, MDF board, HDF board, or paper board; preferably the first and second laths (231, 232) are laths of multilayered paper board; and/or
- distance members (220) are distance members of a particle board, fiber board, MDF board, HDF board, or paper board; preferably the distance members (220) are distance members of paper board.

7. The panel (200) according to any of the claims 1 to 6, the strips being arranged perpendicular to the extension of the first and second sheets (210, 215).

8. The panel (200) according to any of the claims 1 to 7, wherein a third and a fourth lath (233, 234), each optionally comprising a plurality of strips arranged on top of each other, are arranged in parallel between the first and second sheets (210, 215) to form a first channel (241) between the third and fourth lath (233, 234); preferably the optional strips in the third and fourth laths (233, 234) being arranged perpendicular to the extension of the first and second sheets (210, 215); preferably the first channel (241) being arranged in the centre of the panel (200); and/or
wherein a fifth lath (235), optionally comprising a plurality of strips arranged on top of each other, is arranged, in parallel to the first lath (231), between the first and second sheets (210, 215) to form a second channel (242) between the first and fifth lath (231, 235); preferably the optional strips in the fifth lath (235) being arranged perpendicular to the extension of the first and second sheets (210, 215), optionally a sixth lath (236), optionally comprising a plurality of strips arranged on top of each other, is arranged, in parallel to the second lath (232), between the first and second sheets (210, 215) to form a third channel (243) between the second and sixth lath (232, 236); preferably the optional strips in the sixth lath (236) being arranged perpendicular to the extension of the first and second sheets (210, 215),
preferably wherein the panel (200) is provided with a support (800) to keep the panel (200) in up-right position on a floor, the support (800) having a rod (802) received in the first, second, or third channel (241, 242, 243), and a foot (804) extending perpendicularly to the extension of the rod (802) and preferably essentially perpendicularly to the extension of the sheets (210, 215).

9. The panel (200) according to any of the claims 1 to 8, wherein a sound absorbing material is arranged between the first sheet (210) and the second sheet (215).

10. The panel (200) according to any of the claims 1 to 9, wherein at least one connector (300) is provided forming a rigid structure for associated equipment, said at least one connector (300) being configured to be at least partially inserted in a cavity formed between said first and second sheets (210, 215), wherein said at least one connector (300) is attached to a lath (230, 231, 232, 233, 234, 235, 236) of the panel (200) by means of a fastener (400), providing for mounting the panel (200) as part of a room divider (100),
preferably wherein said at least one connector (300) comprises an inclined surface (324) being configured to guide the fastener (400) to attach to the lath (230, 231, 232, 233, 234, 235, 236) at an angle α being larger than 0°, preferably larger than 45°, in relation the longitudinal extension of the lath (230, 231, 232, 233, 234, 235, 236), the angle α preferably being less than 90°, such as larger than 45° and up to 75°,
the panel (200) preferably further comprising at least one washer (500), the washer being a separate washer or an integrated washer, wherein said at least one connector (300) is attachable to said at least one lath (230) by means of the fastener (400) via the washer (500),
and preferably wherein:
the washer (500) is configured to be arranged against the inclined surface (324), the washer (500) further comprising a hole (502) through which the fastener (400) is receivable and which is configured to be aligned with an opening (314) in the inclined surface (324), and wherein the washer (500) further comprises at least one hill (504) on the surface (506) of the washer (500) configured to face away from the inclined surface (324), and wherein the at least one hill (504) having a top which is arranged only on one side of a line A parallel with the surface (506) and through the center of the hole (502); or
the washer (500) is integrated in the inclined surface (324), and wherein at least one hill (504) is arranged on the surface of the inclined surface (324), the at least one hill (504) having a top which is arranged only on one side of a line A parallel with the surface (506) and extending through the center of an opening (314) in the inclined surface (324).

11. The panel (200) according to claim 10, wherein said at least one connector (300) comprises a connection element (304) for attachment of said associated equipment, such as a suspension member (1200) for assembling the panel (200) as a sliding door, or an adjustable foot (900).

12. The panel (200) according to claim 10 or 11, wherein at least one connector (300) comprises a receiving portion (326) comprising a sleeve portion (328) configured to engage with a notch (712) of an attachment element (708) of an attachment member (700a-c).

13. A room divider comprising at least two panels (200) according to any of the claims 1 to 12.

14. The room divider according to claim 13, comprising at least a first panel (200a), a second panel (200b), and an attachment member (700a-c), wherein the first panel (200a) is attachable to the second panel (200b) by the attachment member (700a-c), the attachment member (700a-c) comprising:
a first portion (714, 718, 724) configured to be attached to the first panel (200a); and
a second portion (716, 720, 726) configured to be attached to the second panel (200b); wherein
the attachment member (700a-c) is configured to retain the first and second panels (200a, 200b) in an assembled position.

15. The room divider according to claim 14, wherein each panel (200a, 200b) comprises a receiving portion (326, 606), and wherein the first portion (714, 718, 724) and/or the second portion (716, 720, 726) comprises at least one attachment element (708) configured to be attached to a corresponding receiving portion (326, 606) of a respective panel (200a, 200b),
preferably wherein
each attachment element (708) comprises a generally cylindrical portion (710) configured to be inserted into a respective receiving portion (326, 606); and/or
each attachment element (708) comprises a generally conical portion (711) at one end, preferably at an insertion end by which the attachment element (708) is to be inserted into a receiving portion (326, 606); and/or
each attachment element (708) comprises a notch (712) configured to engage with a respective receiving portion (326, 606); preferably each attachment element (708) is configured to engage with the receiving portion (326, 606) in a snap fit.

## Patentansprüche

1. Raumteilerpanel (200), wobei das Panel ein Hohlplattenmaterial mit einer ersten dünnen Platte (210) und einer zweiten dünnen Platte (215) umfasst, wobei mehrere Abstandselemente (220) zwischen der ersten dünnen Platte (210) und der zweiten dünnen Platte (215) angeordnet sind, wobei die mehreren Abstandselemente (220) jeweils mit der ersten dünnen Platte (210) und mit der zweiten dünnen Platte (215) verbunden sind, wobei eine erste und eine zweite Latte (231, 232), die jeweils mehrere Leisten (238) umfassen, die aufeinander angeordnet sind, zwischen der ersten dünnen Platte (210) und der zweiten dünnen Platte (215) entlang gegenüberliegender Kanten des Hohlplattenmaterials parallel angeordnet sind, wobei die erste und die zweite Latte (231, 232) jeweils mit der ersten dünnen Platte (210) und der zweiten dünnen Platte (215) verbunden sind, wodurch ein Hohlplattenmaterial bereitgestellt wird, und wobei die erste dünne Platte und/oder die zweite dünne Platte (210, 215) auf der Außenoberfläche mit einem Stoff bedeckt sind, um ein Raumteilerpanel (200) bereitzustellen.

2. Panel (200) nach Anspruch 1, wobei der Stoff (270) ein Vliesstoff ist, wobei der Vliesstoff vorzugsweise kardiert ist und wahlweise ein quergetäfelter, nadelgestanzter Vliesstoff ist.

3. Panel (200) nach Anspruch 2, wobei der Vliesstoff eine Schmelzfaser, wie etwa 10 bis 50 Gew.-% Schmelzfasern, umfasst, wobei der Vliesstoff thermisch gebunden ist.

4. Panel (200) nach einem der Ansprüche 1 bis 3, wobei der Vliesstoff ein Vliesstoff aus Polyester, wie etwa wiederaufbereitetem Polyester, ist; wobei der Vliesstoff aus Polyester vorzugsweise ein Flächengewicht von 50 bis 500 gsm (g/m²), wie etwa 100 bis 400 gsm (g/m²) oder 150 bis 300 gsm (g/m²) aufweist,
vorzugsweise wobei der Vliesstoff aus Polyester 50 bis 90 Gew.-% Spinnfasern aus Polyester und 10 bis 50 Gew.-% Schmelzfasern umfasst, wobei der Vliesstoff aus Polyester ein kardierter und wahlweise quergetäfelter, nadelgestanzter und thermisch gebundener Vliesstoff ist, der ein Flächengewicht von 50 bis 500 gsm (g/m²), wie etwa 100 bis 400 gsm (g/m²) oder 150 bis 300 gsm (g/m²), aufweist; wobei die Spinnfasern vorzugsweise eine lineare Dichte von 2 bis 12 dtex (Gramm pro 10 km), wie etwa 4 bis 10 dtex, aufweisen und die Schmelzfasern eine lineare Dichte von 1 bis 8 dtex, wie etwa 2 bis 6 dtex, aufweisen.

5. Panel (200) nach einem der Ansprüche 1 bis 4, wobei die Abstandselemente (220) Leisten sind, die senkrecht zur Ausdehnung der ersten und der zweiten dünnen Platte (210, 215) angeordnet sind; wobei die Leisten vorzugsweise in einem mäandernden Muster angeordnet sind.

6. Panel (200) nach einem der Ansprüche 1 bis 5, wobei
- die erste und die zweite dünne Platte (210, 215) Holzzellulosefasern umfassen; und/oder
- die erste und die zweite Latte (231, 232) Holzzellulosefasern umfassen; und/oder
- die Abstandselemente (220) Holzzellulosefasern umfassen,
wobei vorzugsweise:
- die erste und die zweite dünne Platte (210, 215) dünne Platten aus einer Spanplatte, einer Faserplatte, einer MDF-Platte, einer HDF-Platte oder Karton sind; wobei die erste und die zweite dünne Platte (210, 215) vorzugsweise dünne Platten aus Karton sind; und/oder
- die erste und die zweite Latte (231, 232) Latten aus einer Spanplatte, einer Faserplatte, einer MDF-Platte, einer HDF-Platte oder Karton sind; wobei die erste und die zweite Latte (231, 232) vorzugsweise Latten aus mehrschichtigem Karton sind; und/oder
- die Abstandselemente (220) Abstandselemente aus einer Spanplatte, einer Faserplatte, einer MDF-Platte, einer HDF-Platte oder einem Karton sind; wobei die Abstandselemente (220) vorzugsweise Abstandselemente aus Karton sind.

7. Panel (200) nach einem der Ansprüche 1 bis 6, wobei die Leisten senkrecht zur Ausdehnung der ersten und der zweiten dünnen Platte (210, 215) angeordnet sind.

8. Panel (200) nach einem der Ansprüche 1 bis 7, wobei eine dritte und eine vierte Latte (233, 234), die jeweils wahlweise mehrere Leisten umfassen, die aufeinander angeordnet sind, parallel zwischen der ersten und der zweiten dünnen Platte (210, 215) angeordnet sind, derart, dass ein erster Kanal (241) zwischen der dritten und der vierten Latte (233, 234) gebildet wird; wobei die wahlweisen Leisten in der dritten und der vierten Latte (233, 234) vorzugsweise senkrecht zur Ausdehnung der ersten und der zweiten dünnen Platte (210, 215) angeordnet sind; wobei der erste Kanal (241) vorzugsweise in der Mitte des Panels (200) angeordnet ist; und/oder
wobei eine fünfte Latte (235), die wahlweise mehrere Leisten umfasst, die aufeinander angeordnet sind, parallel zur ersten Latte (231) zwischen der ersten und der zweiten dünnen Platte (210, 215) angeordnet ist, derart, dass ein zweiter Kanal (242) zwischen der ersten und der fünften Latte (231, 235) gebildet wird; wobei die wahlweisen Leisten in der fünften Latte (235) vorzugsweise senkrecht zur Ausdehnung der ersten und der zweiten dünnen Platte (210, 215) angeordnet sind, wobei wahlweise eine sechste Latte (236), die wahlweise mehrere Leisten umfasst, die aufeinander angeordnet sind, parallel zur zweiten Latte (232) zwischen der ersten und der zweiten dünnen Platte (210, 215) angeordnet ist, derart, dass ein dritter Kanal (243) zwischen der zweiten und der sechsten Latte (232, 236) gebildet wird; wobei die wahlweisen Leisten in der sechsten Latte (236) vorzugsweise senkrecht zur Ausdehnung der ersten und der zweiten dünnen Platte (210, 215) angeordnet sind,
wobei das Panel (200) vorzugsweise mit einer Stütze (800) versehen ist, um das Panel (200) in einer aufrechten Position auf einem Boden zu halten, wobei die Stütze (800) eine Stange (802), die im ersten, zweiten oder dritten Kanal (241, 242, 243) aufgenommen ist, und einen Fuß (804), der sich senkrecht zur Ausdehnung der Stange (802) und vorzugsweise im Wesentlichen senkrecht zur Ausdehnung der dünnen Platten (210, 215) erstreckt, aufweist.

9. Panel (200) nach einem der Ansprüche 1 bis 8, wobei ein schallabsorbierendes Material zwischen der ersten dünnen Platte (210) und der zweiten dünnen Platte (215) angeordnet ist.

10. Panel (200) nach einem der Ansprüche 1 bis 9, wobei mindestens ein Verbinder (300) vorgesehen ist, der eine steife Struktur für zugeordnete Ausstattung bildet, wobei der mindestens eine Verbinder (300) konfiguriert ist, zumindest teilweise in einem Hohlraum eingesetzt zu sein, der zwischen der ersten und der zweiten dünnen Platte (210, 215) gebildet ist, wobei der mindestens eine Verbinder (300) mittels eines Befestigungselements (400) an einer Latte (230, 231, 232, 233, 234, 235, 236) des Panels (200) befestigt wird, wobei das Montieren des Panels (200) als Teil eines Raumteilers (100) bereitgestellt wird,
vorzugsweise wobei der mindestens eine Verbinder (300) eine schräge Fläche (324) umfasst, die konfiguriert ist, das Befestigungselement (400) zu führen, derart, dass es unter einem Winkel α, der größer als 0°, vorzugsweise größer als 45°, in Bezug auf die Ausdehnung in Längsrichtung der Latte (230, 231, 232, 233, 234, 235, 236) ist, an der Latte (230, 231, 232, 233, 234, 235, 236) befestigt wird, wobei der Winkel α vorzugsweise kleiner als 90°, wie etwa größer als 45° und bis zu 75°, ist,
wobei das Panel (200) vorzugsweise ferner mindestens eine Unterlegscheibe (500) umfasst, wobei die Unterlegscheibe eine getrennte Unterlegscheibe oder eine integrierte Unterlegscheibe ist, wobei der mindestens eine Verbinder (300) mittels des Befestigungselements (400) über die Unterlegscheibe (500) an mindestens einer Latte (230) befestigt werden kann,
und vorzugsweise wobei:
die Unterlegscheibe (500) konfiguriert ist, gegen die schräge Fläche (324) angeordnet zu sein, wobei die Unterlegscheibe (500) ferner ein Loch (502) umfasst, durch das das Befestigungselement (400) aufgenommen werden kann und das konfiguriert ist, auf eine Öffnung (314) in der schrägen Fläche (324) ausgerichtet zu sein, und wobei die Unterlegscheibe (500) ferner mindestens eine Erhebung (504) auf der Fläche (506) der Unterlegscheibe (500) umfasst, die konfiguriert ist, von der schrägen Fläche (324) abgewandt zu sein, und wobei die mindestens eine Erhebung (504) eine Oberseite aufweist, die lediglich auf einer Seite einer Linie A parallel zur Fläche (506) und durch die Mitte des Lochs (502) angeordnet ist; oder
wobei die Unterlegscheibe (500) in die schräge Fläche (324) integriert ist und wobei mindestens eine Erhebung (504) auf der Oberfläche der schrägen Fläche (324) angeordnet ist, wobei die mindestens eine Erhebung (504) eine Oberseite aufweist, die lediglich auf einer Seite einer Linie A angeordnet ist, die zur Fläche (506) parallel ist und sich durch die Mitte einer Öffnung (314) in der schrägen Fläche (324) erstreckt.

11. Panel (200) nach Anspruch 10, wobei der mindestens eine Verbinder (300) ein Verbindungselement (304) zur Befestigung der zugeordneten Ausstattung wie etwa eines Aufhängungsbauteils (1200) zum Montieren des Panels (200) als eine Schiebetür oder eines einstellbaren Fußes (900) umfasst.

12. Panel (200) nach Anspruch 10 oder 11, wobei mindestens eine Verbinder (300) einen Aufnahmeabschnitt (326) umfasst, der einen Hülsenabschnitt (328) umfasst, der konfiguriert ist, mit einer Kerbe (712) eines Befestigungselements (708) eines Befestigungsbauteils (700a-c) in Eingriff zu gelangen.

13. Raumteiler, der mindestens zwei Panels (200) nach einem der Ansprüche 1 bis 12 umfasst.

14. Raumteiler nach Anspruch 13, der mindestens ein erstes Panel (200a), ein zweites Panel (200b) und ein Befestigungsbauteil (700a-c) umfasst, wobei das erste Panel (200a) durch das Befestigungsbauteil (700a-c) am zweiten Panel (200b) befestigt werden kann, wobei das Befestigungsbauteil (700a-c) Folgendes umfasst:
einen ersten Abschnitt (714, 718, 724), der konfiguriert ist, am ersten Panel (200a) befestigt zu werden; und
einen zweiten Abschnitt (716, 720, 726), der konfiguriert ist, am zweiten Panel (200b) befestigt zu werden; wobei
das Befestigungsbauteil (700a-c) konfiguriert ist, das erste und das zweite Panel (200a, 200b) in einer zusammengebauten Position zu halten.

15. Raumteiler nach Anspruch 14, wobei jedes Panel (200a, 200b) einen Aufnahmeabschnitt (326, 606) umfasst und wobei der erste Abschnitt (714, 718, 724) und/oder der zweite Abschnitt (716, 720, 726) mindestens ein Befestigungselement (708) umfassen, das konfiguriert ist, an einem entsprechenden Aufnahmeabschnitt (326, 606) eines jeweiligen Panels (200a, 200b) befestigt zu werden,
vorzugsweise wobei
jedes Befestigungselement (708) einen im Allgemeinen zylindrischen Abschnitt (710) umfasst, der konfiguriert ist, in einen jeweiligen Aufnahmeabschnitt (26, 606) eingesetzt zu werden; und/oder
jedes Befestigungselement (708) einen im Allgemeinen konischen Abschnitt (711) an einem Ende, vorzugsweise an einem Einsetzende, durch das das Befestigungselement (708) in einen Aufnahmeabschnitt (326, 606) eingesetzt werden soll, umfasst; und/oder
jedes Befestigungselement (708) eine Kerbe (712) umfasst, die konfiguriert ist, mit einem jeweiligen Aufnahmeabschnitt (326, 606) in Eingriff zu gelangen; wobei jedes Befestigungselement (708) vorzugsweise konfiguriert ist, in einer Rastverbindung mit dem Aufnahmeabschnitt (326, 606) in Eingriff zu gelangen.

## Revendications

1. Panneau séparateur de pièce (200), ledit panneau comprenant un matériau en carton creux avec une première feuille (210) et une seconde feuille (215), dans lequel une pluralité d'organes d'écartement (220) sont disposés entre la première feuille (210) et la seconde feuille (215), la pluralité d'organes d'écartement (220) étant reliés à la première feuille (210) et à la seconde feuille (215), respectivement, dans lequel une première et une deuxième latte (231, 232), comprenant chacune une pluralité de bandes (238) disposées les unes sur les autres, sont disposées en parallèle entre la première feuille (210) et la seconde feuille (215) le long des bords opposés du matériau en carton creux, la première et la deuxième latte (231, 232) étant reliées à la première feuille (210) et à la seconde feuille (215), respectivement, fournissant ainsi un matériau en carton creux, et dans lequel au moins l'une des première et seconde feuilles (210, 215), à la surface extérieure, est recouverte d'un tissu (270) pour fournir un panneau séparateur de pièce (200).

2. Panneau (200) selon la revendication 1, dans lequel le tissu (270) est un tissu non tissé ; le tissu non tissé étant de préférence un tissu non tissé aiguilleté, cardé et facultativement superposé transversalement.

3. Panneau (200) selon la revendication 2, dans lequel le tissu non tissé comprend une fibre fondue, telle que 10 à 50 % en poids de fibres fondues, le tissu non tissé étant lié thermiquement.

4. Panneau (200) selon l'une quelconque des revendications 1 à 3, dans lequel le tissu non tissé est un tissu non tissé de polyester, tel que du polyester recyclé ; de préférence, le tissu non tissé de polyester ayant un poids superficiel de 50 à 500 g/m² (gsm), tel que 100 à 400 g/m² (gsm) ou 150 à 300 g/m² (gsm),
de préférence, dans lequel le tissu non tissé de polyester comprend 50 à 90 % en poids de fibres discontinues de polyester, et 10 à 50 % en poids de fibres fondues, le tissu non tissé de polyester étant un tissu non tissé aiguilleté et thermocollé, cardé et facultativement superposé transversalement, ayant un poids superficiel de 50 à 500 g/m² (gsm), tel que 100 à 400 g/m² (gsm) ou 150 à 300 g/m² (gsm) ; de préférence, les fibres discontinues ayant une densité linéaire de 2 à 12 dtex (grammes par 10 km), telle que 4 à 10 dtex, et les fibres fondues ayant une densité linéaire de 1 à 8 dtex, telle que 2 à 6 dtex.

5. Panneau (200) selon l'une quelconque des revendications 1 à 4, dans lequel les organes d'écartement (220) sont des bandes disposées perpendiculairement à l'extension des première et seconde feuilles (210, 215) ; de préférence, les bandes étant disposées selon un motif sinueux.

6. Panneau (200) selon l'une quelconque des revendications 1 à 5, dans lequel
- les première et seconde feuilles (210, 215) comprennent des fibres lignocellulosiques ; et/ou
- les première et deuxième lattes (231, 232) comprennent des fibres lignocellulosiques ; et/ou
- les organes d'écartement (220) comprennent des fibres lignocellulosiques,
de préférence dans lequel :
- les première et seconde feuilles (210, 215) sont des feuilles d'un aggloméré, carton de fibres, carton MDF, carton HDF, ou carton ; de préférence, les première et seconde feuilles (210, 215) sont des feuilles de carton ; et/ou
- les première et deuxième lattes (231, 232) sont des lattes d'un aggloméré, carton de fibres, carton MDF, carton HDF, ou carton ; de préférence, les première et deuxième lattes (231, 232) sont des lattes de carton multicouche ; et/ou
- les organes d'écartement (220) sont des organes d'écartement d'un aggloméré, carton de fibres, carton MDF, carton HDF, ou carton ; de préférence, les organes d'écartement (220) sont des organes d'écartement de carton.

7. Panneau (200) selon l'une quelconque des revendications 1 à 6, les bandes étant disposées perpendiculairement à l'extension des première et seconde feuilles (210, 215).

8. Panneau (200) selon l'une quelconque des revendications 1 à 7, dans lequel une troisième et une quatrième latte (233, 234), chacune comprenant facultativement une pluralité de bandes disposées les unes sur les autres, sont disposées en parallèle entre les première et seconde feuilles (210, 215) pour former un premier canal (241) entre la troisième et la quatrième latte (233, 234) ; de préférence, les bandes facultatives des troisième et quatrième lattes (233, 234) sont disposées perpendiculairement à l'extension des première et seconde feuilles (210, 215) ; de préférence, le premier canal (241) est disposé au centre du panneau (200) ; et/ou
dans lequel une cinquième latte (235), comprenant facultativement une pluralité de bandes disposées les unes sur les autres, est disposée, parallèlement à la première latte (231), entre les première et seconde feuilles (210, 215) pour former un deuxième canal (242) entre la première et la cinquième latte (231, 235) ; de préférence, les bandes facultatives de la cinquième latte (235) sont disposées perpendiculairement à l'extension des première et seconde feuilles (210, 215), facultativement une sixième latte (236), comprenant facultativement une pluralité de bandes disposées les unes sur les autres, est disposée, parallèlement à la deuxième latte (232), entre les première et seconde feuilles (210, 215) pour former un troisième canal (243) entre la deuxième et la sixième latte (232, 236) ; de préférence les bandes facultatives de la sixième latte (236) sont disposées perpendiculairement à l'extension des première et seconde feuilles (210, 215),
de préférence dans lequel le panneau (200) est pourvu d'un support (800) pour maintenir le panneau (200) en position haut-droite sur un sol, le support (800) ayant une tige (802) reçue dans le premier, le deuxième ou le troisième canal (241, 242, 243), et un pied (804) s'étendant perpendiculairement à l'extension de la tige (802) et de préférence essentiellement perpendiculairement à l'extension des feuilles (210, 215).

9. Panneau (200) selon l'une quelconque des revendications 1 à 8, dans lequel un matériau insonorisant est disposé entre la première feuille (210) et la seconde feuille (215).

10. Panneau (200) selon l'une quelconque des revendications 1 à 9, dans lequel au moins un connecteur (300) est prévu formant une structure rigide pour un équipement associé, ledit au moins un connecteur (300) étant configuré pour être au moins partiellement inséré dans une cavité formée entre lesdites première et seconde feuilles (210, 215), dans lequel ledit au moins un connecteur (300) est fixé à une latte (230, 231, 232, 233, 234, 235, 236) du panneau (200) au moyen d'une attache (400), assurant le montage du panneau (200) en tant que partie d'un séparateur de pièce (100),
de préférence dans lequel ledit au moins un connecteur (300) comprend une surface inclinée (324) configurée pour guider l'attache (400) à fixer à la latte (230, 231, 232, 233, 234, 235, 236) à un angle α supérieur à 0°, de préférence supérieur à 45°, par rapport à l'extension longitudinale de la latte (230, 231, 232, 233, 234, 235, 236), l'angle α étant de préférence inférieur à 90°, tel que supérieur à 45° et jusqu'à 75°,
le panneau (200) comprenant de préférence en outre au moins une rondelle (500), la rondelle étant une rondelle séparée ou une rondelle intégrée, dans lequel ledit au moins un connecteur (300) peut être fixé à ladite au moins une latte (230) au moyen de l'attache (400) via la rondelle (500),
et de préférence dans lequel :
la rondelle (500) est configurée pour être disposée contre la surface inclinée (324), la rondelle (500) comprenant en outre un trou (502) à travers lequel l'attache (400) peut être reçue et qui est configuré pour être aligné avec une ouverture (314) dans la surface inclinée (324), et dans lequel la rondelle (500) comprend en outre au moins une colline (504) sur la surface (506) de la rondelle (500) configurée pour faire face à l'opposé de la surface inclinée (324), et dans lequel la au moins une colline (504) a un sommet qui n'est disposé que sur un côté d'une ligne A parallèle à la surface (506) et à travers le centre du trou (502) ; ou
la rondelle (500) est intégrée dans la surface inclinée (324), et dans lequel au moins une colline (504) est disposée sur la surface de la surface inclinée (324), la au moins une colline (504) ayant un sommet qui n'est disposé que sur un côté d'une ligne A parallèle à la surface (506) et s'étendant à travers le centre d'une ouverture (314) dans la surface inclinée (324).

11. Panneau (200) selon la revendication 10, dans lequel ledit au moins un connecteur (300) comprend un élément de connexion (304) pour fixation dudit équipement associé, tel qu'un organe de suspension (1200) pour assembler le panneau (200) sous forme d'une porte coulissante, ou un pied réglable (900).

12. Panneau (200) selon la revendication 10 ou 11, dans lequel au moins un connecteur (300) comprend une portion de réception (326) comprenant une portion de manchon (328) configurée pour venir en prise avec une encoche (712) d'un élément de fixation (708) d'un organe de fixation (700a-c).

13. Séparateur de pièce comprenant au moins deux panneaux (200) selon l'une quelconque des revendications 1 à 12.

14. Séparateur de pièce selon la revendication 13, comprenant au moins un premier panneau (200a), un second panneau (200b) et un organe de fixation (700a-c), dans lequel le premier panneau (200a) peut être fixé au second panneau (200b) par l'organe de fixation (700a-c), l'organe de fixation (700a-c) comprenant :
une première portion (714, 718, 724) configurée pour être fixée au premier panneau (200a) ; et
une seconde portion (716, 720, 726) configurée pour être fixée au second panneau (200b) ; dans lequel
l'organe de fixation (700A-c) est configuré pour retenir les premier et second panneaux (200a, 200b) en position assemblée.

15. Séparateur de pièce selon la revendication 14, dans lequel chaque panneau (200a, 200b) comprend une portion de réception (326, 606), et dans lequel la première portion (714, 718, 724) et/ou la seconde portion (716, 720, 726) comprend au moins un élément de fixation (708) configuré pour être fixé à une portion de réception correspondante (326, 606) d'un panneau respectif (200a, 200b),
de préférence dans lequel
chaque élément de fixation (708) comprend une portion généralement cylindrique (710) configurée pour être insérée dans une portion de réception respective (326, 606) ; et/ou
chaque élément de fixation (708) comprend une portion généralement conique (711) à une extrémité, de préférence à une extrémité d'insertion par laquelle l'élément de fixation (708) doit être inséré dans une portion de réception (326, 606) ; et/ou
chaque élément de fixation (708) comprend une encoche (712) configurée pour venir en prise avec une portion de réception respective (326, 606) ; de préférence, chaque élément de fixation (708) est configuré pour venir en prise avec la portion de réception (326, 606) par encliquetage.
